# EUROPEAN PATENT APPLICATION

(11) **EP 4 765 947 A1**
(43) Date of publication of application: **24.06.2026**
(21) Application number: 24860487.8
(22) Date of filing: 02.09.2024
(51) Int. Cl.: H04W 36/00, H04W 36/08, H04W 36/30, H04W 74/0808, H04W 84/12

(54) **METHOD AND APPARATUS FOR MEASURING CHANNEL ON BASIS OF COORDINATION IN WIRELESS LAN SYSTEM**

(30) Priority: 01.09.2023 KR 20230116317
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); MOON, Ju Seong, Osan-si Gyeonggi-do 18101 (KR)
(74) Representative: Isarpatent
(86) International application number: PCT/KR2024/013133
(87) International publication number: WO 2025/048571

(57) **Abstract**

The present disclosure relates to measuring a channel based on coordination in a wireless local area network (WLAN), and according to an embodiment of the present disclosure, a method for operating a station (STA) in a WLAN includes: receiving information on a time at which a frame is transmitted from a first access point (AP); receiving a scan response message that is generated based on the information on the time at which the frame is transmitted; receiving the frame from a second AP based on the scan response message; measuring a channel based on the frame received from the second AP; and transmitting a measurement report message to the first AP, wherein the information on the time at which the frame is transmitted includes a time at which the frame is transmitted by at least one AP including the second AP.

## Description

### Technical Field

The following description relates to a wireless local area network (WLAN) system, and more particularly, to a method and apparatus for a WLAN terminal to measure a channel based on coordination in a WLAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple channels or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for a terminal to change association among a plurality of access points in a WLAN system.

The present disclosure is directed to providing a method and apparatus for a terminal to perform efficient roaming in a WLAN system.

The present disclosure is directed to providing a method and apparatus for quickly transmitting data that is stored in a terminal and requires low latency in a WLAN system.

The present disclosure is directed to providing a method and apparatus for a terminal to change an operating link for a channel scan procedure in a WLAN system.

The present disclosure is directed to providing a method and apparatus for reducing a delay for a channel scan procedure in a WLAN system.

The present disclosure is directed to providing a method and apparatus for a plurality of APs to coordinatively support channel access of a wireless terminal in a WLAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method for operating a station (STA) in a wireless local area network (WLAN) includes: receiving information on a time at which a frame is transmitted from a first access point (AP); receiving a scan response message that is generated based on the information on the time at which the frame is transmitted; receiving the frame from a second AP based on the scan response message; measuring a channel based on the frame received from the second AP; and transmitting a measurement report message to the first AP, wherein the information on the time at which the frame is transmitted includes a time at which the frame is transmitted by at least one AP including the second AP.

According to an embodiment of the present disclosure, a method for operating a first access point (AP) in a wireless local area network (WLAN) includes: obtaining information on a time at which a frame is transmitted; transmitting the information on the time at which the frame is transmitted to a station (STA); transmitting a scan response message that is generated based on the information on the time at which the frame is transmitted; and receiving a measurement report message from the STA, wherein the information on the time at which the frame is transmitted includes information on a time at which the frame is transmitted by at least one AP, and the measurement report message includes a channel measurement result for a second AP that is one of the at least one AP.

According to an embodiment of the present disclosure, a station (STA) in a wireless local area network (WLAN) includes a transceiver and a processor coupled to the transceiver, wherein the processor is configured to: receive information on a time at which a frame is transmitted from a first access point (AP); receive a scan response message that is generated based on the information on the time at which the frame is transmitted; receive the frame from a second AP based on the scan response message; measure a channel based on the frame received from the second AP; and transmit a measurement report message to the first AP, and wherein the information on the time at which the frame is transmitted includes a time at which the frame is transmitted by at least one AP including the second AP.

According to an embodiment of the present disclosure, a first access point (AP) in a wireless local area network (WLAN) includes a transceiver and a processor coupled to the transceiver, wherein the processor is configured to: obtain information on a time at which a frame is transmitted; transmit the information on the time at which the frame is transmitted to a station (STA); transmit a scan response message that is generated based on the information on the time at which the frame is transmitted; and receive a measurement report message from the STA, and wherein the information on the time at which the frame is transmitted includes information on a time at which the frame is transmitted by at least one AP, and the measurement report message includes a channel measurement result for a second AP that is one of the at least one AP.

### Advantageous Effects

According to the present disclosure, when a primary channel is in a busy state in a WLAN system, a WLAN terminal can operate in a subchannel.

According to the present disclosure, when a WLAN terminal in a WLAN system determines that decoding is impossible in a primary channel but detects energy exceeding a threshold, the WLAN can operate in a subchannel.

According to the present disclosure, a WLAN terminal in a WLAN system can request channel information from another WLAN terminal that is currently associated and perform a channel scan procedure based on provided channel information.

According to the present disclosure, a WLAN terminal in a WLAN channel can perform a fast channel scan.

According to the present disclosure, a roaming operation of a WLAN terminal can be smoothly performed in a WLAN system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of a communication node constituting a WLAN system.
FIG. 2 is a conceptual diagram illustrating a first embodiment of multiple links configured between multi-link devices (MLDs).
FIG. 3 illustrates a first embodiment of a coordinative channel measurement method in a WLAN system.
FIG. 4 illustrates a second embodiment of a coordinative channel measurement method in a WLAN system.
FIG. 5 illustrates a third embodiment of a coordinative channel measurement method in a WLAN system.
FIG. 6 illustrates a fourth embodiment of a coordinative channel measurement method in a WLAN system.
FIG. 7 illustrates a fifth embodiment of a coordinative channel measurement method in a WLAN system.
FIG. 8 illustrates a flowchart of a procedure of measuring a channel according to an embodiment of the present disclosure.
FIG. 9 illustrates a flowchart of a method of receiving a channel measurement report according to an embodiment of the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, various exemplary embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

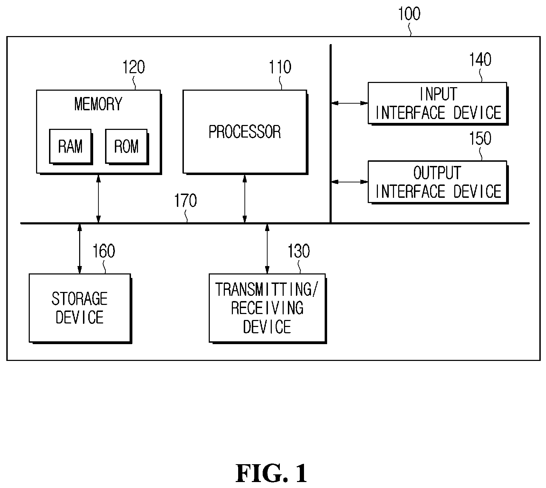

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

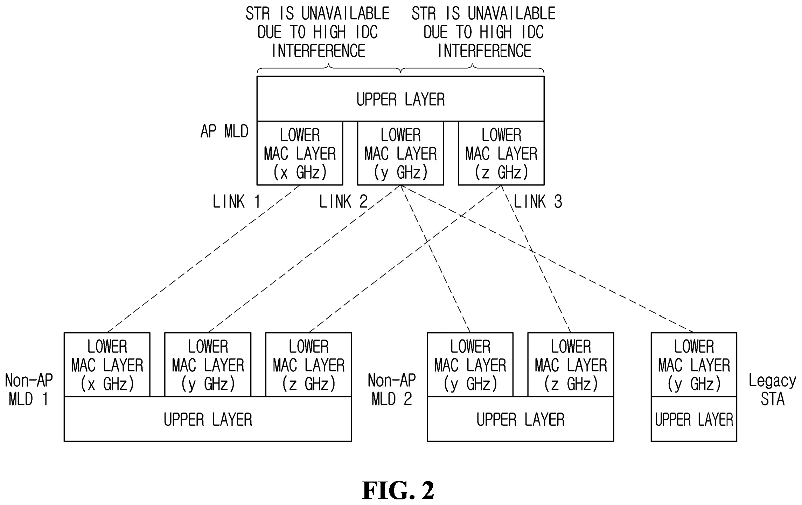

FIG. 2 illustrates the concept of multiple links set between multi link devices (MLDs) in a WLAN system.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An Ap(s) associated with an AP MLD may have a different MAC address, and an STA(s) associated with a non-AP MLD may have a different MAC address. APs present in an AP MLD and having different MAC addresses may be in charge of respective links and serve as independent APs.

STAs present in a non- AP MLD and having different MAC addresses may be in charge of respective links and serve as independent STAs. A non-AP MLD may be referred to as a STA MLD. An MLD may support a simultaneous transmit and receive (STR) operation. For example, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive a frame over multiple links using a non-contiguous bandwidth extension scheme (e.g., 80 MHz+80 MHz). A multi-link operation may include multi-band transmission. An AP MLD may include a plurality of APs, and the plurality of APs may operate on different links. A plurality of APs may each perform a function of a lower MAC layer. A plurality of APs may each be referred to as "a communication node" or "a lower entity". A communication node (that is, AP) may operation according to the control of an upper layer (or the processor 110 illustrated in FIG. 1). A non-AP MLD may include a plurality of STAs, and the plurality of STAs may operate on different links. A plurality of STAs may each be referred to as "a communication node" or "a lower entity". A communication node (e.g., STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. For example, the number of links and/or a link to be used among multiple links may be set. A non-AP MLD (e.g., a STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. A STA (e.g., a STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer convergence procedure (PLCP) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be a pair of links limited to non simultaneous transmit and receive (NSTR). Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. That is, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP.

A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP in charge of each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA in charge of each link exists separately. A plurality of STAs may be managed in a single STA MLD. Accordingly, coordination may be possible among a plurality of STAs that belong to the same STA MLD.

For example, AP1 of an AP MLD and STA1 of an STA MLD may each be in charge of a first link and perform communication using the first link. AP2 of the AP MLD and STA2 of the STA MLD may each be in charge of a second link and perform communication using the second link. STA2 may receive state change information for the first link on the second link. For example, the STA MLD may collect information (e.g., state change information) received from each link and control an operation performed by STA1 based on the collected information.

Next, methods for transmitting and receiving data in a wireless LAN system will be described. When a method (e.g., transmission or reception of a signal) performed at a first communication node among communication nodes is described, a second communication node corresponding to it may perform a method (e.g., reception or transmission of a signal) corresponding to the method performed at the first communication node. That is, when an operation of an STA is described, an AP corresponding to it may perform an operation corresponding to the operation of the STA. On the other hand, when an operation of an AP is described, an STA corresponding to it may perform an operation corresponding to the operation of the AP. In an embodiment, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP.

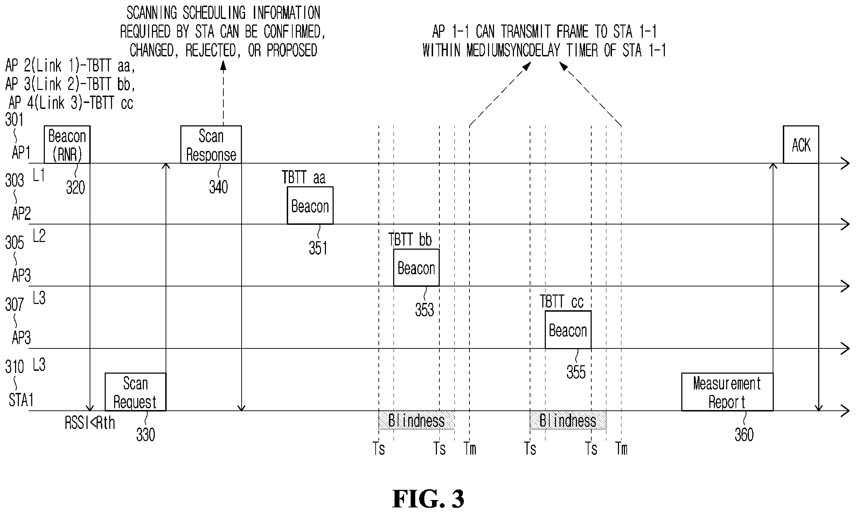

FIG. 3 illustrates a first embodiment of a coordinative channel measurement method in a WLAN system.

Referring to FIG. 3, AP 1 301, AP 2 303, AP 3 305, AP 4 305, and STA 1 310 may operate in a WLAN. STA 1 310 may be associated with AP 1 301 and intend to scan neighboring APs, that is, AP 2 303, AP 3 305, and AP 4 305. STA 1 310 may scan the neighboring APs to perform association with one of the neighboring APs. A series of operations in which STA 1 310 stops communication with the AP that is previously associated, associates with one of the neighboring APs, and performs communication with the neighboring AP may be referred to as a roaming operation. AP 1 310 and AP 2 303 may operate on a first link. That is, AP 1 301 and AP 2 303 may operate on the same link. AP 3 305 may operate on a second link. AP 4 305 may operate on a third link. The operating frequencies (e.g., center frequencies) of the first link and the second link may be different. The first link and the third link may have different operating frequencies. AP 1 301 to AP 4 305 may communicate in connection with each other. For example, AP 1 301 to AP 4 305 may communicate via wired Ethernet. Alternatively, AP 1 301 to AP 4 305 may communicate via a WLAN. Alternatively, AP 1 301 to AP 4 305 may communicate with each other according to a communication standard different from the wired Ethernet and the WLAN. AP 1 301 to AP 4 305 may communicate with each other to form an MLD or form some layers of the MLD. For example, AP 1 301 to AP 4 305 may form MLD MAC upper layers. Alternatively, AP 1 301 to AP 4 305 may form MLD MAC lower layers. Alternatively, AP 1 301 to AP 4 305 may form both MLD MAC upper layers and MLD MAC lower layers. As another method, AP 1 301 to AP 4 305 may not form an MLD but exchange communication information with each other. As an example, the exchange of communication information may include exchange of operation information for a roaming operation of an STA associated with APs (e.g., operation information on link usage and cessation) or exchange of state information of STAs operating roaming operations (e.g., information on the sequence number (SN), packet number (PN), and BlockAck scoreboard of downlink and uplink packets for a specific STA) and a downlink packet of which the destination is an STA that performs the roaming operation. As another example, the exchange of communication information may correspond to exchanging operation information of APs.

Since AP 1 301 to AP 4 305 communicate with each other, AP 1 301 may be aware of information on the neighboring APs (AP 2 303 to AP 4 305). The information on the neighboring APs includes target beacon transmission time (TBTT) information. The TBTT information may be timing information. That is, the TBTT information indicates a timing or a period at which beacon frame transmission by each AP is expected. For example, AP 1 301 may be aware of information on a timing at which beacon frames of neighboring APs are transmitted relative to the current time.

AP 1 301 may include TBTT information of a neighboring AP in a beacon frame 320 and transmit the TBTT information. The TBTT information may be transmitted through a reduced neighbor report (RNR) information element included in the beacon frame 320. STA 1 310 may receive the beacon frame 320 from AP 1 301. Based on the RNR information element included in the beacon frame 320, STA 1 310 may be aware of TBTT information of neighboring APs. STA 1 310 may identify the TBTT information of the neighboring APs through not only the RNR information element but also various methods. For example, AP 1 may transmit a beacon frame including an information element such as a multi-link element, and the multi-link element may include operation information including the TBTT information of the neighboring APs.

The received signal strength indication (RSSI), signal-to-noise ratio (SNR), and the like of the beacon frame 320 of AP 1 301 or/and data frames received by STA 1 310 may be lower than a roaming threshold of STA 1 310. The roaming threshold may be a preset value, a value broadcast through a beacon, or a value set through mutual negotiation. For example, the roaming threshold may be Rth, and the RSSI may be lower than Rth. When the RSSI of a frame received by STA 1 310 is lower than Rth or under other roaming initiation conditions, STA 1 310 may transmit a scan request frame 330. As an example, the other roaming initiation conditions may include a decrease in the RSSI of the received frame at a predetermined rate or higher. STA 1 310 may transmit the scan request frame 330 to AP 1 301 based on the TBTT information of the neighboring APs. As another method, STA 1 310 may not receive the beacon frame 320 or the RNR information element may not be included in the beacon frame 320 of AP 1 301, and thus STA 1 310 may not be aware of the TBTT information of the neighboring APs. STA 1 310 may transmit the scan request frame 330 to AP 1 301 even when STA 1 310 is not aware of the TBTT information of the neighboring APs. The scan request frame 330 may be a management frame including an action frame, a frame including an information element, a frame in which specific information is included in a control field of a MAC header (e.g., HT control field), or other frames. The scan request frame 330 may include channel scan schedule information requested by STA 1 310. The channel scan schedule information includes at least one of the TBTT information of the neighboring APs (or TBTT timings), link IDs of the neighboring APs, BSSIDs of the neighboring APs, or information on operating frequencies of the APs. The channel scan schedule information may use a listing order of the link IDs or BSSIDs of the neighboring APs to indicate that STA 1 310 performs a scan at a TBTT timing of a corresponding AP. As another method, the scan request frame 330 may include information that requests channel scan schedule from AP 1 301. That is, STA 1 310 may not transmit the channel scan schedule information to AP 1 310. For example, even when not identifying the TBTT information of the neighboring APs, STA 1 310 may receive the channel scan schedule information from AP 1 301 and scan the neighboring APs.

AP1 301 may transmit a scan response frame 340 to STA 1 310. The scan response frame 340 may be a response to the scan request frame 330 transmitted by STA 1 310. As another method, when AP 1 301 determines that roaming of STA 1 310 is required, the scan response frame 340 may be transmitted without reception of the scan request frame 330. The scan response frame 340 may include a response to the channel scan schedule information included in the scan request frame 330 transmitted by STA 1 310. For example, the scan response frame 340 may include information indicating that AP 1 301 confirms, modifies, or rejects the channel scan schedule information transmitted by STA 1 310. When information indicating rejection is included, a code indicating a reason of the rejection may be included in the scan response frame 340. In addition, the scan response frame 340 may include the channel scan schedule information that AP 1 301 provides to STA 1 310. When AP 1 301 confirms a channel scan schedule of STA 1 310, the channel scan schedule information may include or may not include information transmitted by STA 1 310. When AP 1 301 modifies the channel scan schedule of STA 1 310, the channel scan schedule information may include channel scan information proposed by AP 1 301. When AP 1 301 rejects the channel scan schedule of STA 1 310, the channel scan schedule information may not include the channel scan information proposed by AP 1 301. On the other hand, the channel scan schedule information may include the channel scan information proposed by AP 1 301. The channel scan schedule that AP 1 301 provides to STA 1 310 may include at least one of TBTT information of neighboring APs including AP 2 303 to AP 4 305, a link ID, a BSSID, or information on the operating frequency of an AP. TBTTs of the neighboring APs may be TBTT aa, TBTT bb, and TBTT cc, and TBTT aa is TBTT of AP 2 303, TBTT bb is TBTT of AP 3 305, and TBTT cc is TBTT of AP 4 305. TBTT information included in the scan request frame 330 and the scan response frame 340 may indicate the TBTT information of the neighboring APs in TUs or/and offset of a time synchronization function (TSF). 1 TU is 1024 us.

STA 1 310 may receive the scan response frame 340 from AP 1 301 and perform a channel scan based on the channel scan schedule information provided by AP 1 301. At TBTT aa, STA 1 310 may scan AP 2 303 that operates at the same frequency as AP 1 301. STA 1 310 receives a beacon frame 351 of AP 2 303 without modifying the operating frequency. AP 1 301 may complete transmission of a frame to STA 1 310 before TBTT aa that is the TBTT of AP 2 303. STA 1 310 may complete the transmission of the frame to AP 1 301 before TBTT aa. When AP 1 301 and STA 1 310 complete transmission before respective TBTTs, it may indicate that transmission is completed before Ts that is a time for switching a link at each TBTT. Completion of transmission before a specific timing may include ending a transmit opportunity (TXOP) before the specific timing. At TBTT bb and TBTT cc, STA 1 310 may scan AP 3 305 and AP 4 305that operate at a different frequency from AP 1 301 and modify an operating frequency to receive beacon frames 353 and 355 of AP 3 305 and AP 4 305. For example, STA 1 310 modifies the operating frequency to the second link and the third link. After finishing the scan, STA 1 310 modifies the operating frequency again to operate on the first link. The length of a time period during which STA 1 310 modifies the operating frequency at TBTT bb and TBTT cc respectively and then operates on the first link may be greater than or equal to 2 × Ts + (a beacon transmission period of an AP), and STA 1 310 is incapable of receiving the frame of AP 1 310 during the time period. Ts is a time required for STA 1 310 to switch the operating frequency. When STA 1 310 operates after returning to the first link from the second link or the third link, frame transmission may be infeasible or limited during a duration of Tm that is a MediumSyncDelay timer or NAVSyncDelay time. AP 1 301 may completely transmit a frame to STA 1 310 before TBTT bb and TBTT cc that are timings at which STA 1 310 scans AP 3 305 and AP 4 305respectively. STA 1 310 may completely transmit a frame to AP 1 301 before TBTT bb and TBTT cc. When AP 1 301 and STA 1 310 complete transmission before respective TBTTs, it may indicate that transmission is completed before Ts that is a time for switching a link at each TBTT. Completion of transmission before a specific timing may include ending a transmit opportunity (TXOP) before the specific timing. When AP 1 301 and STA 1 310 complete a channel access operation (e.g., an EDCA backoff operation) in proximity to each TBTT (e.g., when a backoff counter reaches 0), AP 1 301 may not transmit the frame to STA 1 310, and STA 1 310 may not transmit the frame to AP 1 301. That is, the backoff counter of AP 1 301 or/and the backoff counter of STA 1 310 may remain at 0. On the other hand, even when the backoff counter of AP 1 301 reaches 0, AP 1 301 may select a new backoff counter to continuously perform a backoff operation. Alternatively, AP 1 301 may determine that a frame, whose destination is STA 1 310, does not exist in the transmission queue of AP 1 301. When there is a frame whose destination is an STA different from STA 1 310, AP 1 301 may transmit a frame to the STA different from STA 1 310. After the channel scan operation of STA 1 310 ends, AP 1 301 or/and STA 1 310 may transmit a frame. AP 1 301 does not transmit a frame to STA 1 310 at TBTT bb and TBTT cc during a time period having a length greater than or equal to 2 × Ts + (a beacon transmission period of an AP). That is, while STA 1 310 is performing a series of operations for performing a channel scan, AP 1 301 does not transmit a frame to STA 1 310. While STA 1 310 is performing a series of operations for performing a channel scan, STA 1 310 cannot communicate with AP 1 301. For example, AP 1 301 delays the channel access operation for transmission to STA 1 310 or does not transmit a frame to STA 1 310 and waits even when an EDCA backoff counter reaches 0 (e.g., maintaining the backoff counter at 0 or reselecting a backoff counter). AP 1 301 may transmit a frame to STA 1 310 after the time period. The frame transmitted by AP 1 301 to STA 1 310 may be a trigger frame. For example the trigger frame transmitted by AP 1 301 to STA 1 310 may be a frame for releasing the MediumSyncDelay timer or NAVSyncDelay of STA 1 310 that restricts frame transmission for the duration of Tm, and may trigger uplink data of STA 1 310. As another method, the frame transmitted by AP 1 301 to STA 1 310 may be a downlink frame.

STA 1 310 may complete a scan based on scan schedule information provided by AP 1 301. For example, STA 1 310 may collect information of AP 2 303 to AP 4 305. STA 1 310 transmits a measurement report frame 360 to AP 1 301. The measurement report frame 360 is a frame that transmits information (e.g., signal strength, SNR, link congestion) of the neighboring APs including AP 2 303 to AP 4 305. AP 1 301 may use a response frame (e.g., an ACK frame or a BlockAck frame) to respond to the measurement report frame 360 of STA 1 310. AP 1 301 may determine whether to roam and a roaming target based on the information of the neighboring APs from STA 1 310.

In the embodiment, in order to the information of the neighboring APs, STA 1 310 may transmit a probe request frame and then receive a probe response frame, instead of receiving the beacon frames 351, 353 and 355 of the APs.

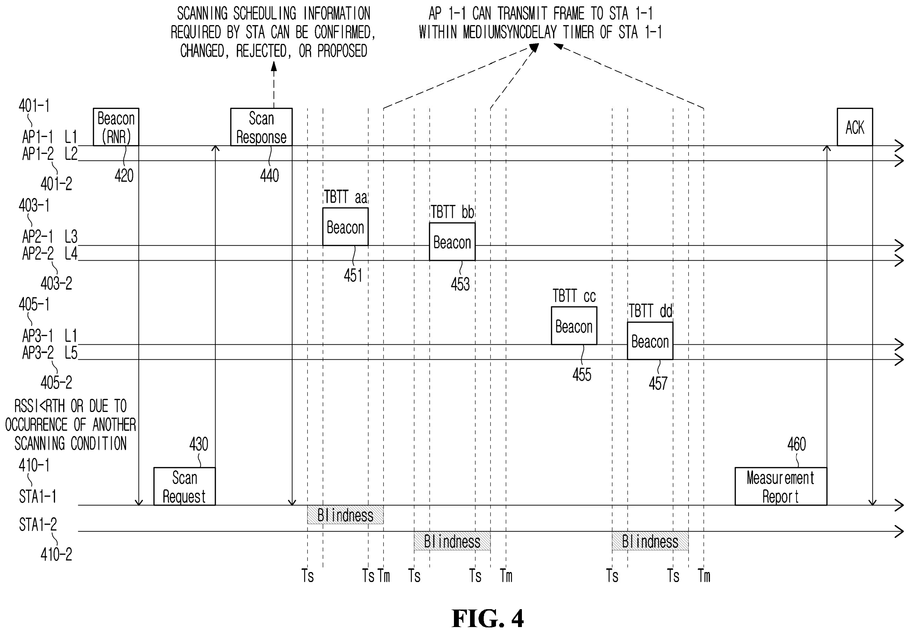

FIG. 4 illustrates a second embodiment of a coordinative channel measurement method in a WLAN system.

Referring to FIG. 4, AP MLD 1401, AP MLD 2 403, AP MLD 3 405, AP MLD 3 405, and STA MLD 1 410 may operate in a WLAN. Affiliated AP 1-1 401-1 and AP 1-2 401-2 operate in AP MLD 1 401. AP 1-1 401-1 may operate on a first link, and AP 1-2 401-2 may operate on a second link. Affiliated AP 2-1 403-1 and AP 2-2 403-2 operate in AP MLD 2 403. AP 2-1 403-1 may operate on a third link, and AP 2-2 403-2 may operate on a fourth link. Affiliated AP 3-1405-1 and AP 3-2 405-2 operate in AP MLD 3 405. AP 3-1 405-1 may operate on the first link, and AP 3-2 405-2 may operate on a fifth link. Affiliated STA 1-1 410-1 and STA 1-2 410-2 operate in STA MLD 1 410. STA MLD 1 410 may be associated with AP MLD 1 401 and intend to scan neighboring AP MLDs, that is, AP MLD 2 403 and AP MLD 3 405. That is, STA MLD 410 may intend to scan APs that are affiliated with the neighboring AP MLDs. STA MLD 410 may scan APs affiliated with the neighboring AP MLDs to perform association with one of the neighboring APs. A series of operations in which STA MLD 410 stops communication with an AP MLD that is previously associated, associates with one of the APs affiliated with the neighboring AP MLDs, and performs communication with the neighboring AP may be referred to as a roaming operation. The operating frequencies (e.g., center frequencies) of the first link to the fifth link may be different. AP MLD 1 401 to AP MLD 3 407 may communicate in connection with each other. For example, AP MLD 1 401 to AP MLD 3 405 may communicate via wired Ethernet. Alternatively, AP MLD 1 401 to AP MLD 3 405 may communicate via a WLAN. Alternatively, AP MLD 1 401 to AP MLD 3 405 may communicate with each other according to a communication standard different from the wired Ethernet and the WLAN. AP MLD 1 401 to AP MLD 3 405 or subordinate APs of AP MLD 1 401 to AP MLD 3 405 may communicate with each other to form a new MLD layer. For example, AP MLD 1 401 to AP MLD 3 405 may form a new MLD MAC upper layer or form a new MLD MAC lower layer. Alternatively, AP MLD 1 401 to AP MLD 3 405 may form both MLD MAC upper layers and MLD MAC lower layers. As another method, AP MLD 1 401 to AP MLD 3 405 may not form an MLD but exchange communication information with each other. As an example, the exchange of communication information may include exchange of operation information for a roaming operation of an STA associated with APs (e.g., operation information on link usage and cessation) or exchange of state information of STAs operating roaming operations (e.g., information on the sequence number (SN), packet number (PN), and BlockAck scoreboard of downlink and uplink packets for a specific STA) and a downlink packet of which the destination is an STA that performs the roaming operation. As another example, the exchange of communication information may correspond to exchanging operation information of APs.

Since AP MLD 1 401 to AP MLD 3 405 communicate with each other, AP MLD 1 401 may be aware of information of a neighboring AP MLD and subordinate APs (e.g., AP MLD 2 403, AP 2-1 403-1, and AP 2-2 403-2). Information of neighboring AP MLDs includes TBTT information of subordinate APs. The TBTT information may be timing information. That is, TBTT information indicates a timing or interval at which beacon frame transmission of each AP is expected. For example, AP MLD 1 401 may be aware of information on a timing at which the beacon frames 451, 453, 455 and 457 of neighboring AP MLDs are transmitted relative to the current time.

AP 1-1 401-1 of AP MLD 1 401 may include TBTT information of a neighboring AP in the beacon frame 420 and transmit the TBTT information. The TBTT information may be transmitted through a reduced neighbor report (RNR) information element included in the beacon frame 420. STA 1-1 410-1 may receive the beacon frame 420 from AP 1-1 401-1. Based on an RNR information element included in the beacon frame 420, STA 1-1 410-1 may be aware of TBTT information of neighboring APs (e.g., TBTT information of AP MLD 2 403, AP 2-1 403-1, and AP 2-2 403-2).

The RSSI, SNR, and the like of the beacon frame 420 of AP 1-1 401-1 or/and data frames received by STA 1-1 410-1 may be lower than a roaming threshold of STA 1-1 410-1. For example, the roaming threshold may be Rth, and the RSSI may be lower than Rth. When the RSSI of a frame received by STA 1-1 410-1 is lower than Rth or under other roaming initiation conditions, STA 1-1 410-1 may transmit a scan request frame 430. As an example, the other roaming initiation conditions may include a decrease in the RSSI of the received frame at a predetermined rate or higher. STA 1-1 410-1 may transmit the scan request frame 430 to AP 1-1 401-1 based on the TBTT information of the neighboring APs. As another method, STA 1-1 410-1 may not receive the beacon frame 420 or the RNR information element may not be included in the beacon frame 420 of AP 1-1 401-1, and thus STA 1-1 410-1 may not be aware of the TBTT information of the neighboring APs. STA 1-1 410-1 may transmit the scan request frame 430 to AP 1-1 401-1 even when STA 1-1 410-1 is not aware of the TBTT information of the neighboring APs. The scan request frame 430 may be a management frame including an action frame, a frame including an information element, a frame in which specific information is included in a control field of a MAC header (e.g., HT control field), or other frames. The scan request frame 430 may include channel scan schedule information requested by STA 1-1 410-1. The channel scan schedule information includes at least one of the TBTT information of the neighboring APs (or TBTT timings), link IDs of the neighboring APs, BSSIDs of the neighboring APs, or information on operating frequencies of the APs. The scheduling information may use a listing order of the link IDs or BSSIDs of the neighboring APs to indicate that a scan is performed at a TBTT timing of a corresponding AP. As another method, the scan request frame 430 may include information that requests channel scan schedule from AP 1-1 401-1. That is, STA 1-1 410-1 may not transmit the channel scan schedule information to AP 1-1 401-1. For example, even when not identifying the TBTT information of the neighboring APs, STA 1-1 410-1 may receive the channel scan schedule information from AP 1-1 401-1 and scan the neighboring APs.

AP 1-1 401-1 may transmit a scan response frame to STA 1-1 410-1. The scan response frame 440 may be a response of AP 1-1 401-1 to the scan request frame transmitted by STA 1-1 410-1. As another method, when AP 1-1 401-1 determines that roaming of STA 1-1 410-1 or STA MLD 1 410 is required, the scan response frame 440 may be transmitted without reception of the scan request frame 430. The scan response frame 440 may include a response to the channel scan schedule information included in the scan request frame 430 transmitted by STA 1-1 410-1. For example, the scan response frame 440 may include information indicating that AP 1-1 401-1 confirms, modifies, or rejects the channel scan schedule information transmitted by STA 1-1 410-1. In addition, the scan response frame 440 may include the channel scan schedule information that AP 1-1 401-1 provides to STA 1-1 410-1. When AP 1-1 401-1 confirms a channel scan schedule of STA 1-1 410-1, the channel scan schedule information may include or may not include information transmitted by STA 1-1 410-1 without modification. When AP 1-1 401-1 modifies the channel scan schedule of STA 1-1 410-1, the channel scan schedule information may include channel scan information proposed by AP 1-1 401-1. When AP 1-1 401-1 rejects the channel scan schedule of STA 1-1 410-1, the channel scan schedule information may not include the channel scan information proposed by AP 1-1 401-1. Alternatively, the channel scan schedule information may include the channel scan information proposed by AP 1-1 401-1. The channel scan schedule provided by AP 1-1 401-1 to STA 1-1 401-1 includes TBTT information and link ID or/and operating frequency information of neighboring APs including subordinate APs of AP MLD 2 403 to AP MLD 3 405. TBTTs of the neighboring APs may be TBTT aa, TBTT bb, TBTT cc, and TBTT dd. Here, TBTT aa is TBTT of AP 2-1 403-1, TBTT bb is TBTT of AP 2-2 403-2, TBTT cc is TBTT of AP 3-1 405-1, and TBTT dd is TBTT of AP 3-2 405-2. TBTT information included in the scan request frame 430 and the scan response frame 440 may indicate the TBTT information of the neighboring APs in TUs and/or offset of a time synchronization function (TSF). 1 TU is 1024 us.

An operation of exchanging the scan request frame 430 and the scan response frame 440 may be performed through multiple links. For example, STA MLD 1 410 may receive the beacon frame 420 of AP MLD 1 401 on at least one of the first link or the second link and request transmission of the scan request frame 430. The exchange of the scan request frame 430 and the scan response frame 440 may be performed on each link. For example, AP 1-1 401-1 and STA 1-1 410-1 operating on the first link may exchange the scan request frame 430 and the scan response frame 440 to scan AP 2-1 403-1 and AP 3-1 405-1. For example, AP 1-2 401-2 and STA 1-2 410-2 operating on the second link may exchange a scan request frame and a scan response frame to scan AP 2-2 403-2 and AP 3-2 405-2.

STA 1-1 410-1 or STA MLD 1 410 may receive the scan response frame 440 from AP 1-1 401-1 or AP MLD 1 401, and STA MLD 1 410 performs a channel scan based on the channel scan schedule information provided by AP MLD 1 401. At TBTT aa, STA 1-1 410-1 may scan AP 2-1 403-1 that operates at a different frequency from that of AP 1-1 401-1. STA 1-1 410-1 may modify an operating frequency to receive the beacon frame 451 of AP 2-1 403-1. For example, STA 1-1 410-1 modifies the operating frequency to the third link. After finishing the scan, STA 1-1 410-1 modifies the operating frequency again to operate on the first link. The length of a time period during which STA 1-1 410-1 modifies the operating frequency at TBTT aa and then operates on the first link may be greater than or equal to 2 × Ts + (a beacon transmission period of an AP), and STA 1-1 410-1 is incapable of receiving the frame of AP 1-1 401-1 during the time period. Ts is a time required for STA 1-1 410-1 to switch the operating frequency. When STA 1-1 410-1 operates after returning to the first link from the third link, frame transmission may be infeasible or limited during a duration of Tm that is a MediumSyncDelay timer or NAVSyncDelay time. AP 1-1 401-1 may completely transmit a frame to STA 1-1 410-1 before TBTT aa that is a timing at which STA 1-1 410-1 scans AP 2-1 403-1. STA 1-1 410-1 may completely transmit a frame to AP 1-1 401-1 before TBTT aa. When AP 1-1 401-1 and STA 1-1 410-1 complete transmission before respective TBTTs, it may indicate that transmission is completed before Ts that is a time for switching a link at each TBTT. Completion of transmission before a specific timing may include ending a transmit opportunity (TXOP) before the specific timing. When AP 1-1 401-1 and STA 1-1 410-1 complete a channel access operation (e.g., an EDCA backoff operation) in proximity to each TBTT (e.g., when a backoff counter reaches 0), AP 1-1 401-1 may not transmit the frame to STA 1-1 410-1, and STA 1-1 410-1 may not transmit the frame to AP 1-1 401-1. The backoff counter of AP 1-1 401-1 or/and the backoff counter of STA 1-1 410-1 may remain at 0. Alternatively, even when the backoff counter of AP 1-1 401-1 reaches 0, AP 1-1 401-1 may select a new backoff counter to continuously perform a backoff operation. Alternatively, AP 1-1 401-1 may determine that a frame, whose destination is STA 1-1 410-1, does not exist in the transmission queue of AP 1. For example, when there is a frame whose destination is an STA different from STA 1-1 410-1, AP 1-1 401-1 may transmit a frame to the STA different from STA 1-1 410-1. After the channel scan operation of STA 1-1 410-1 ends, AP 1-1 401-1 or/and STA 1-1 410-1 may transmit a frame. AP 1-1 401-1 does not transmit a frame to STA 1-1 410-1 at TBTT aa during a time period having a length greater than or equal to 2 × Ts + (a beacon transmission period of an AP). For example, AP 1-1 401-1 delays the channel access operation for transmission to STA 1-1 410-1 or does not transmit a frame to STA 1-1 410-1 and waits even when an EDCA backoff counter reaches 0 (e.g., maintaining the backoff counter at 0 or reselecting a backoff counter). AP 1-1 401-1 may transmit a frame to STA 1-1 410-1 after the time period. The frame transmitted by AP 1-1 401-1 to STA 1-1 410-1 may be a trigger frame. For example, the trigger frame transmitted by AP 1-1 401-1 to STA 1-1 410-1 may be a frame for releasing the MediumSyncDelay timer or NAVSyncDelay of STA 1-1 410-1 that restricts frame transmission for the duration of Tm, and may trigger uplink data of STA 1-1 410-1. As another method, the frame transmitted by AP 1-1 401-1 to STA 1-1 410-1 may be a downlink frame. At TBTT cc, STA 1-1 410-1 may scan AP 3-1 405-1 that operates at the same frequency as that of AP 1-1 401-1. AP 1-1 401-1 completes transmission of a frame to STA 1-1 410-1 before TBTT cc that is TBTT of AP 3-1 405-1. STA 1-1 410-1 may completely transmit a frame to AP 1-1 401-1 before TBTT cc.

At TBTT bb and TBTT dd, STA 1-2 410-2 may scan AP 2-2 403-2 and AP 3-2 405-2 that operate at a different frequency from that of AP 1-2 401-2. STA 1-2 410-2 modifies an operating frequency to receive the beacon frames 453 and 457 of AP 2-2 403-2 and AP 3-2 405-2. For example, STA 1-2 410-2 modifies the operating frequency to the fourth link and the fifth link. After finishing the scan, STA 1-2 410-2 modifies the operating frequency again to operate on the second link. The length of a time period during which STA 1-2 410-2 modifies the operating frequency at TBTT bb and TBTT dd and then operates on the second link may be greater than or equal to 2 × Ts + (a beacon transmission period of an AP), and STA 1-2 410-2 is incapable of receiving the frame of AP 1-2 410-2 during the time period. Ts is a time required for STA 1-2 410-2 to switch the operating frequency. When STA 1-2 410-2 operates after returning to the second link from the fourth link and the fifth link, frame transmission may be infeasible or limited during a duration of Tm that is a MediumSyncDelay timer or NAVSyncDelay time. AP 1-2 401-2 may completely transmit a frame to STA 1-2 410-2 before TBTT bb and TBTT cc that are timings at which STA 1-2 410-2 scans AP 2-2 403-2 and AP 3-2 405-2. STA 1-2 410-2 may completely transmit a frame to AP 1-2 401-2 before TBTT bb and TBTT dd. When AP 1-2 401-2 and STA 1-2 410-2 complete transmission before respective TBTTs, it may indicate that transmission is completed before Ts that is a time for switching a link at each TBTT. Completion of transmission before a specific timing may include ending a transmit opportunity (TXOP) before the specific timing. When AP 1-2 401-2 and STA 1-2 410-2 complete a channel access operation (e.g., an EDCA backoff operation) in proximity to each TBTT (e.g., when a backoff counter reaches 0), AP 1-2 401-2 may not transmit the frame to STA 1-2 410-2, and STA 1-2 410-2 may not transmit the frame to AP 1-2 401-2. The backoff counter of AP 1-2 401-2 or/and the backoff counter of STA 1-2 410-2 may remain at 0. Alternatively, even when the backoff counter of AP 1-2 401-2 reaches 0, AP 1-2 401-2 may select a new backoff counter to continuously perform a backoff operation. Alternatively, AP 1-1 401-1 may determine that a frame, whose destination is STA 1-2 410-2, does not exist in the transmission queue of AP 1-2 410-2. For example, when there is a frame whose destination is an STA different from STA 1-2 410-2, AP 1-1 401-1 may transmit a frame to the STA different from STA 1-2 410-2. After the channel scan operation of STA 1-2 410-2 ends, AP 1-2 401-2 or/and STA 1-2 410-2 may transmit a frame. AP 1-2 401-2 does not transmit a frame to STA 1-2 410-2 at TBTT bb and TBTT cc during a time period having a length greater than or equal to 2 × Ts + (a beacon transmission period of an AP). For example, AP 1-1 401-1 delays the channel access operation for transmission to STA 1-2 410-2 or does not transmit a frame to STA 1-2 410-2 and waits even when an EDCA backoff counter reaches 0 (e.g., maintaining the backoff counter at 0 or reselecting a backoff counter). AP 1-2 401-2 may transmit a frame to STA 1-2 410-2 after the time period. The frame transmitted by AP 1-2 401-2 to STA 1-2 410-2 may be a trigger frame. For example, the trigger frame transmitted by AP 1-2 401-2 to STA 1-2 410-2 may be a frame for releasing the MediumSyncDelay timer or NAVSyncDelay of STA 1-2 410-2 that restricts frame transmission for the duration of Tm, and may trigger uplink data of STA 1-2 410-2. As another method, the frame transmitted by AP 1-2 401-2 to STA 1-2 410-2 may be a downlink frame.

STA MLD 1 410 may complete a scan based on scan schedule information provided by AP MLD 1 401. Through the scan, STA MLD 1 410 may obtain information of the AP. For example, STA MLD 1 410 may collect information of AP MLD 2 403 to AP MLD 3 405 (e.g., information of subordinate APs of AP MLD 2 403 to AP MLD 3 405). STA MLD 1 410 transmits a measurement report frame 460 to AP MLD 1 401. The measurement report frame 460 is a frame for transmitting information of the neighboring AP MLDs, that is, AP MLD 2 403 to AP MLD 3 405 (e.g., the signal strength, SNR, and link congestion of APs operating under AP MLD 2 403 to AP MLD 3 405). AP MLD 1 401 may use a response frame (e.g., an ACK frame or a BlockAck frame) to respond to the measurement report frame 460 from STA MLD 1 410. AP MLD 1 401 may determine whether to roam and a roaming target based on the information of the neighboring AP MLDs of STA MLD 1 410.

In the embodiment, in order to the information of the neighboring AP MLDs, STA MLD 1 410 may transmit a probe request frame and then receive a probe response frame, instead of receiving the beacon frames 451, 453, 455 and 457 of the APs.

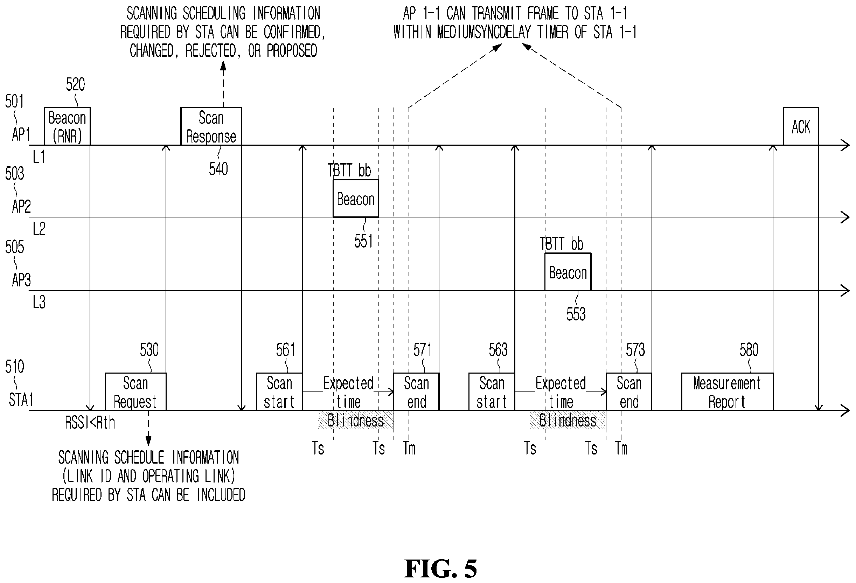

FIG. 5 illustrates a third embodiment of a coordinative channel measurement method in a WLAN system.

Referring to FIG. 5, AP 1 501, AP 2 503, AP 3 505, and STA 1510 may operate in a WLAN. STA 1 510 may be associated with AP 1 501 and intend to scan neighboring APs, that is, AP 2 503 and AP 3 305. STA 1 510 may scan the neighboring APs to perform association with one of the neighboring APs. A series of operations in which STA 1 510 stops communication with the AP that is previously associated, associates with one of the neighboring APs, and performs communication with the neighboring AP may be referred to as a roaming operation.. AP 1 501 may operate on a first link. AP 2 503 may operate on a second link. AP 3 505 may operate on a third link. The operating frequencies (e.g., center frequencies) of the first link and the second link may be different. The first link and the third link may have different operating frequencies. AP 1 501 to AP 3 505 may communicate in connection with each other. For example, AP 1 501 to AP 3 505 may communicate via wired Ethernet. Alternatively, AP 1 501 to AP 3 505 may communicate via a WLAN. Alternatively, AP 1 501 to AP 3 505 may communicate with each other according to a communication standard different from the wired Ethernet and the WLAN. AP 1 501 to AP 3 505 may communicate with each other to form an MLD or form some layers of the MLD. For example, AP 1 501 to AP 3 505 may form MLD MAC upper layers. Alternatively, AP 1 501 to AP 3 505 may form MLD MAC lower layers. Alternatively, AP 1 501 to AP 3 505 may form both MLD MAC upper layers and MLD MAC lower layers. As another method, AP 1 501 to AP 3 505 may not form an MLD but exchange communication information with each other. As an example, the exchange of communication information may include exchange of operation information for a roaming operation of an STA associated with APs (e.g., operation information on link usage and cessation) or exchange of state information of STAs operating roaming operations (e.g., information on the sequence number (SN), packet number (PN), and BlockAck scoreboard of downlink and uplink packets for a specific STA) and a downlink packet of which the destination is an STA that performs the roaming operation. As another example, the exchange of communication information may correspond to exchanging operation information of APs.

Since AP 1 501 to AP 3 505 communicate with each other, AP 1 501 may be aware of information on the neighboring APs (e.g., AP 2 503 to AP 3 505). The information on the neighboring APs includes target beacon transmission time (TBTT) information. The TBTT information may be timing information. That is, TBTT indicates a timing or interval at which beacon frame transmission of each AP is expected. For example, AP 1 501 may be aware of information on a timing at which the beacon frames 551 and 553 of neighboring APs are transmitted relative to the current time.

AP 1 501 may include TBTT information of a neighboring AP in a beacon frame 520 and transmit the TBTT information. The TBTT information may be transmitted through a reduced neighbor report (RNR) information element included in the beacon frame 520. STA 1 510 may receive the beacon frame 520 from AP 1 501. Based on the RNR information element included in the beacon frame 520, STA 1 510 may be aware of TBTT information of neighboring APs. STA 1 510 may identify the TBTT information of the neighboring APs through not only the RNR information element but also various methods. For example, AP 1 may transmit a beacon frame including an information element such as a multi-link element, and the multi-link element may include operation information including the TBTT information of the neighboring APs.

The received signal strength indication (RSSI), signal-to-noise ratio (SNR), and the like of the beacon frame 520 of AP 1 501 or/and data frames received by STA 1 510 may be lower than a roaming threshold of STA 1 510. For example, the roaming threshold may be Rth, and the RSSI may be lower than Rth. The RSSI of a frame received by STA 1 510 is lower than Rth, or based on other roaming initiation conditions, STA 1 510 may transmit a scan request frame 530. As an example, the other roaming initiation conditions may include a decrease in the RSSI of the received frame at a predetermined rate or higher. STA 1 510 may transmit the scan request frame 530 to AP 1 501 based on the TBTT information of the neighboring APs. On the other hand, STA 1 510 may not receive a beacon frame or the RNR information element may not be included in the beacon frame 520 of AP 1 501, and thus STA 1 510 may not be aware of the TBTT information of the neighboring APs. STA 1 510 may transmit the scan request frame 530 to AP 1 501 even when STA 1 310 is not aware of the TBTT information of the neighboring APs. The scan request frame 530 may be a management frame including an action frame, a frame including an information element, a frame in which specific information is included in a control field of a MAC header (e.g., HT control field), or other frames. The scan request frame 530 may include channel scan schedule information requested by STA 1 510. The channel scan schedule information includes at least one of the TBTT information of the neighboring APs or TBTT timings, link IDs of the neighboring APs, BSSIDs of the neighboring APs, or information on operating frequencies of the APs. STA 1 510 may provide scheduling information indicating that STA 1 510 plans to perform a scan at the TBTT of a corresponding AP based on a listing order of the link IDs or BSSIDs of the neighboring APs. As another method, the scan request frame 530 may include information that requests channel scan schedule from AP 1 501. That is, STA 1 510 may not transmit the channel scan schedule information to AP 1 501. For example, even when not identifying the TBTT information of the neighboring APs, STA 1 510 may receive the channel scan schedule information from AP 1 501 and scan the neighboring APs.

AP1 501 may transmit a scan response frame 540 to STA 1 510. The scan response frame 540 may be a response to the scan request frame 540 transmitted by STA 1 510. As another method, when AP 1 501 determines that roaming of STA 1 510 is required, the scan response frame 540 may be transmitted without reception of the scan request frame 530. The scan response frame 540 may include a response to the channel scan schedule information included in the scan request frame 530 transmitted by STA 1 510. For example, the scan response frame 540 may include information indicating that AP 1 501 confirms, modifies, or rejects the channel scan schedule information transmitted by STA 1 510. In addition, the scan response frame 540 may include the channel scan schedule information that AP 1 501 provides to STA 1 510. When AP 1 501 confirms a channel scan schedule of STA 1 510, the channel scan schedule information may include or may not include information transmitted by STA 1 510 without modification. When AP 1 501 modifies the channel scan schedule of STA 1 510, the channel scan schedule information may include channel scan information proposed by AP 1 501. When AP 1 501 rejects the channel scan schedule of STA 1 510, the channel scan schedule information may not be included in the scan response frame 540. On the other hand, even when AP 1 501 rejects the channel scan schedule of STA 1 510, the scan response frame 540 may include the channel scan information proposed by AP 1 501. The channel scan schedule provided by AP 1 501 to STA 1 510 includes TBTT information and link ID or/and operating frequency information of neighboring APs including AP 2 503 to AP 3 505. TBTTs of the neighboring APs may be TBTT aa and TBTT bb, TBTT aa is TBTT of AP 2 503, and TBTT bb is TBTT of AP 3 505. TBTT information included in the scan request frame 530 and the scan response frame 540 may indicate the TBTT information of the neighboring APs in TUs or/and offset of a time synchronization function (TSF). 1 TU is 1024 us.

STA 1 510 may receive the scan response frame 540 from AP 1 501 and perform a channel scan based on the channel scan schedule information provided by AP 1 501. At TBTT aa and TBTT bb, STA 1 510 may scan AP 2 503 and AP 3 505 that operate at a different frequency from that of AP 1 501 and modify an operating frequency to receive beacon frames 551 and 553 of AP 2 503 and AP 3 505. For example, STA 1 510 modifies the operating frequency to the second link and the third link. STA 1 510 transmits scan initiation frames 561 and 563 to AP 1 501 before changing the operating frequency. After finishing the scan, STA 1 510 modifies the operating frequency again to operate on the first link. When operating on the first link again, STA 1 510 transmits scan completion frames 571 and 573 to AP 1 501. The length of a time period during which STA 1 510 modifies the operating frequency at TBTT aa and TBTT bb respectively and then operates on the first link may be greater than or equal to 2 × Ts + (a beacon transmission period of an AP), and STA 1 510 is incapable of receiving the frame of AP 1 510 during the time period. Ts is a time required for STA 1 510 to switch the operating frequency. When STA 1 510 operates after returning to the first link from the second link or the third link, frame transmission may be infeasible or limited during a duration of Tm that is a MediumSyncDelay timer or NAVSyncDelay time. Accordingly, the scan completion frames 571 and 573 of STA 1 510 may not be immediately transmitted. Accordingly, STA 1 510 may not transmit the scan completion frames 571 and 573, transmit the scan completion frames 571 and 573 in Tm, or transmit the scan completion frames 571 when transmitting a RTS frame within Tm to AP 1 501 and normally receiving a CTS frame as a response. AP 1 501 may completely transmit a frame to STA 1 510 before TBTT aa and TBTT bb that are timings at which STA 1 510 scans AP 2 503 and AP 3 505. STA 1 510 may completely transmit a frame to AP 1 501 before TBTT aa and TBTT bb. When AP 1 501 and STA 1 510 complete transmission before respective TBTTs, it may indicate that transmission is completed before Ts that is a time for switching a link at each TBTT. Completion of transmission before a specific timing may include ending a transmit opportunity (TXOP) before the specific timing. When AP 1 501 and STA 1 510 complete a channel access operation (e.g., an EDCA backoff operation) in proximity to each TBTT (e.g., when a backoff counter reaches 0), AP 1 501 may not transmit the frame to STA 1 510, and STA 1 510 may not transmit the frame to AP 1 501. The backoff counter of AP 1 501 or/and the backoff counter of STA 1 510 may remain at 0. Alternatively, even when the backoff counter of AP 1 501 reaches 0, AP 1 501 may select a new backoff counter to continuously perform a backoff operation. Alternatively, AP 1 501 may determine that a frame, whose destination is STA 1 510, does not exist in the transmission queue of AP 1 501. For example, when there is a frame whose destination is an STA different from STA 1 510, AP 1 301 may transmit a frame to the STA different from STA 1 510. After the channel scan operation of STA 1 510 ends, AP 1 501 or/and STA 1 510 may transmit a frame. AP 1 501 does not transmit a frame to STA 1 510 during a time period that has a length greater than or equal to 2 × Ts + (a transmission period of an AP) from a timing of receiving the scan initiation frames 561 and 563 from STA 1 510 or from TBTT aa and TBTT bb. For example, AP 1 501 delays the channel access operation for transmission to STA 1 510 or does not transmit a frame to STA 1 510 and waits even when an EDCA backoff counter reaches 0 (e.g., maintaining the backoff counter at 0 or reselecting a backoff counter). AP 1 501 may transmit a frame to STA 1 510 after the time period. The frame transmitted by AP 1 501 to STA 1 510 may be a trigger frame. For example the trigger frame transmitted by AP 1 501 to STA 1 510 may be a frame for releasing the MediumSyncDelay timer or NAVSyncDelay of STA 1 510 that restricts frame transmission for the duration of Tm, and may trigger uplink data or scan completion frame of STA 1 510. As another method, the frame transmitted by AP 1 501 to STA 1 510 may be a downlink frame. In a different method from the method in which AP 1 501 transmits the frame to STA 1 510 after the period, AP 1 501 may transmit the frame to STA 1 510 after receiving the scan completion frame from STA 1 510. While STA 1 510 performs a series of operations for performing a channel scan operation (e.g., during a time period in which STA 1 transmits the scan initiation frame to AP 1 and then the scan completion frame to AP 1), STA 1 510 is incapable of communicating with AP 1 501.

STA 1 510 may complete a scan based on scan schedule information provided by AP 1 501. For example, STA 1 510 may collect information of AP 2 503 to AP 3 505. STA 1 510 transmits a measurement report frame 580 to AP 1 501. The measurement report frame 580 is a frame that transmits information (e.g., signal strength, SNR, link congestion) of the neighboring APs including AP 2 503 to AP 3 505. AP 1 501 may use a response frame (e.g., an ACK frame or a BlockAck frame) to respond to the measurement report frame 580 of STA 1 510. AP 1 501 may determine whether to roam and a roaming target based on the information of the neighboring APs of STA 1510.

In the embodiment, in order to the information of the neighboring APs, STA 1 510 may transmit a probe request frame and then receive a probe response frame, instead of receiving the beacon frames 551 and 553 of the APs.

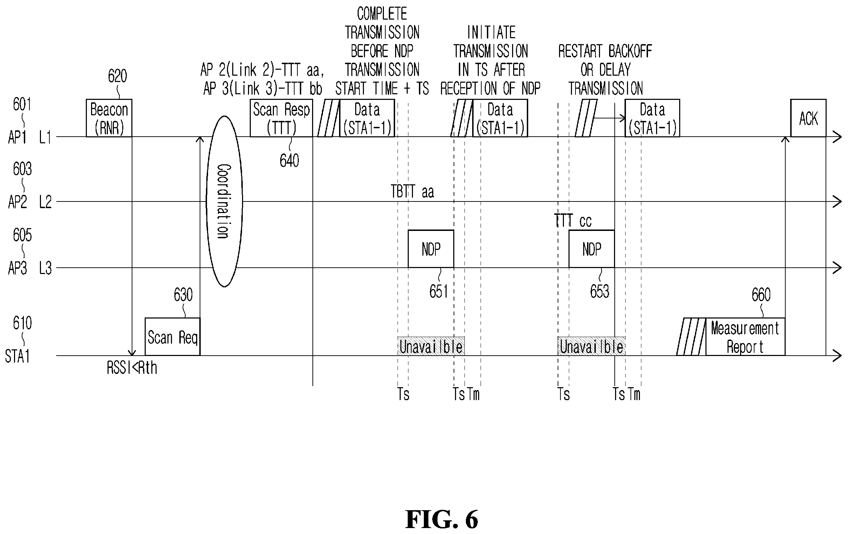

FIG. 6 illustrates a fourth embodiment of a coordinative channel measurement method in a WLAN system.

Referring to FIG. 6, AP 1 601, AP 2 603, AP 3 605, and STA 1610 may operate in a WLAN. STA 1 610 may be associated with AP 1 601 and intend to scan neighboring APs, that is, AP 2 603 and AP 3 605. AP 1 601 may operate on a first link. AP 2 603 may operate on a second link. AP 3 605 may operate on a third link. STA 1 610 may scan the neighboring APs to perform association with one of the neighboring APs. A series of operations in which STA 1 610 stops communication with the AP that is previously associated, associates with one of the neighboring APs, and performs communication with the neighboring AP may be referred to as a roaming operation. The operating frequencies (e.g., center frequencies) of the first link and the second link may be different. The first link and the third link may have different operating frequencies. AP 1 601 to AP 3 605 may communicate in connection with each other. For example, AP 1 601 to AP 3 605 may communicate via wired Ethernet. Alternatively, AP 1 601 to AP 3 605 may communicate via a WLAN. Alternatively, AP 1 601 to AP 3 605 may communicate with each other according to a communication standard different from the wired Ethernet and the WLAN. AP 1 601 to AP 3 605 may communicate with each other to form an MLD or form some layers of the MLD. For example, AP 1 601 to AP 3 605 may form MLD MAC upper layers. Alternatively, AP 1 601 to AP 3 605 may form MLD MAC lower layers. Alternatively, AP 1 601 to AP 3 605 may form both MLD MAC upper layers and MLD MAC lower layers. As another method, AP 1 601 to AP 3 605 may not form an MLD but exchange communication information with each other.

As an example, the exchange of communication information may include exchange of operation information for a roaming operation of an STA associated with APs (e.g., operation information on link usage and cessation) or exchange of state information of STAs operating roaming operations (e.g., information on the sequence number (SN), packet number (PN), and BlockAck scoreboard of downlink and uplink packets for a specific STA) and a downlink packet of which the destination is an STA that performs the roaming operation. As another example, the exchange of communication information may correspond to exchanging operation information of APs.

Since AP 1 601 to AP 3 605 communicate with each other, AP 1 601 may be aware of information on the neighboring APs (e.g., AP 2 603 and AP 3 605). The information on the neighboring APs includes target beacon transmission time (TBTT) information. The TBTT information may be timing information. That is, TBTT information indicates a timing or interval at which beacon frame transmission of each AP is expected. For example, AP 1 601 may be aware of information on a timing at which beacon frames of neighboring APs are transmitted relative to the current time.

AP 1 601 may include TBTT information of a neighboring AP in a beacon frame 620 and transmit the TBTT information. The TBTT information may be transmitted through a reduced neighbor report (RNR) information element included in the beacon frame 620. STA 1 610 may receive the beacon frame 620 from AP 1 601. Based on the RNR information element included in the beacon frame 620, STA 1 610 may be aware of TBTT information of neighboring APs. STA 1 610 may identify the TBTT information of the neighboring APs through not only the RNR information element but also various methods. For example, AP 1 601 may transmit a beacon frame including an information element such as a multi-link element, and the multi-link element may include operation information including the TBTT information of the neighboring APs.

The received signal strength indication (RSSI), signal-to-noise ratio (SNR), and the like of the beacon frame 620 of AP 1 601 or/and data frames received by STA 1 610 may be lower than a roaming threshold of STA 1 610. For example, the roaming threshold may be Rth, and the RSSI may be lower than Rth. When the RSSI of a frame received by STA 1 610 is lower than Rth, or based on other roaming initiation conditions, STA 1 610 may transmit a scan request frame 630. As an example, the other roaming initiation conditions may include a decrease in the RSSI of the received frame at a predetermined rate or higher. The scan request frame transmitted by STA 1 610 to AP 1 601 may include a list of neighboring APs that STA 1 610 obtains from the beacon frame 620 of AP 1 601. As another method, STA 1 610 may not be aware of information on the neighboring APs, and the scan request frame 630 transmitted by STA 1 610 to AP 1 601 may not include the information on the neighboring APs.

Based on the scan request frame 630 received from STA 1 610, AP 1 601 performs coordination for scan with the neighboring APs, that is, AP 2 603 and AP 3 605. Based on the coordination for scan, a time to trigger (TTT) is set for scanning AP 2 603 and AP 3 605. TTT for scanning AP 2 603 is TTT aa, and TTT for scanning AP 3 605 is TTT bb. AP 1 601 may include the set TTT information in a scan response frame 640 and transmit the scan response frame 640 to STA 1 610. The scan response frame 640 further includes information on the links or/and operation frequencies of the neighboring APs, that is, AP 2 603 and AP 3 605. The scan response frame 640 may be a response to the scan request frame 640 transmitted by STA 1 610. The scan response frame 640 may be transmitted without reception of the scan request frame 630, even when it is determined that roaming of STA 1 610 is required. The TTT information of the neighboring APs (e.g., TTT aa and TTT bb) may be represented as a TU or/ an offset of a time synchronization function (TSF) after a timing at which the scan response frame 640 is initially or completely transmitted. 1 TU is 1024 us.

STA 1 610 may receive the scan response frame 640 from AP 1 601 and perform a channel scan based on the channel scan schedule information provided by AP 1 601. At TTT aa and TTT bb, STA 1 610 may scan AP 2 603 and AP 3 605 that operate at a different frequency from that of AP 1 601 and modify an operating frequency to receive frames of AP 2 603 and AP 3 605. For example, STA 1 610 modifies the operating frequency to the second link and the third link. AP 2 603 and AP 3 605 transmit null data PPDU (NDP) frames 651 and 653 at the set TTTs, that is, TTT aa and TTT bb. Since AP 1 601 to AP 3 605 negotiate TTTs, AP 2 603 and AP 3 605 do not transmit an NDP announcement (NDPA) frame before transmitting the NDP frames 651 and 653. On the other hand, even though AP 1 601 to AP 3 605 negotiate TTTs, AP 2 603 and AP 3 605 may transmit the NDPA frame before transmitting the NDP frames 651 and 653. AP 2 603 and AP 3 605 may transmit a probe response frame instead of transmitting the NDP frames 651 and 653 at TTT aa and TTT bb. STA 1 610 may receive the frames 651 and 653 of AP 2 603 and AP 3 605 and obtain information of AP 2 603 and AP 3 605.

After finishing the scan, STA 1 610 modifies the operating frequency again to operate on the first link. When operating on the first link again, STA 1 610 transmits a scan completion frame to AP 1 601. The length of a time period during which STA 1 610 modifies the operating frequency at TTT aa and TTT bb respectively and then operates on the first link may be greater than or equal to 2 × Ts + (an NDP transmission period of an AP), and STA 1 610 is incapable of receiving the frame of AP 1 601 during the time period. Ts is a time required for STA 1 610 to switch the operating frequency. When STA 1 610 operates after returning to the first link from the second link or the third link, frame transmission may be infeasible or limited during a duration of Tm that is a MediumSyncDelay timer or NAVSyncDelay time. Accordingly, the scan completion frame of STA 1 610 may not be immediately transmitted. AP 1 601 may completely transmit a frame to STA 1 610 before TTT aa and TTT bb that are timings at which STA 1 610 scans AP 2 603 and AP 3 605. STA 1 610 may completely transmit a frame to AP 1 601 before TTT aa and TTT bb. When AP 1 601 and STA 1 610 complete transmission before respective TTTs, it may indicate that transmission is completed before Ts that is a time for switching a link at each TTT. Completion of transmission before a specific timing may include ending a transmit opportunity (TXOP) before the specific timing. When AP 1 601 and STA 1 610 complete a channel access operation (e.g., an EDCA backoff operation) in proximity to each TTT (e.g., when a backoff counter reaches 0), AP 1 601 may not transmit the frame to STA 1 610, and STA 1 610 may not transmit the frame to AP 1 601. The backoff counter of AP 1 601 or/and the backoff counter of STA 1 610 may remain at 0. Alternatively, even when the backoff counter of AP 1 601 reaches 0, AP 1 601 may select a new backoff counter to continuously perform a backoff operation. Alternatively, AP 1 601 may determine that there is no frame whose destination is STA 1 610 in a transmission queue of AP 1 601, and when there is a frame whose destination is another STA different from STA 1 610, may transmit the frame to the STA different from STA 1 610. After the channel scan operation of STA 1 610 ends, AP 1 601 or/and STA 1 610 may transmit a frame. AP 1 601 does not transmit a frame to STA 1 610 at TTT aa and TTT bb during a time period having a length greater than or equal to 2 × Ts + (an NDP transmission period of an AP). For example, AP 1 601 delays the channel access operation for transmission to STA 1 610 or does not transmit a frame to STA 1 610 and waits even when an EDCA backoff counter reaches 0 (e.g., maintaining the backoff counter at 0 or reselecting a backoff counter). AP 1 601 may transmit a frame to STA 1 610 after the time period. The frame transmitted by AP 1 601 to STA 1 610 may be a trigger frame. For example the trigger frame transmitted by AP 1 601 to STA 1 610 may be a frame for releasing the MediumSyncDelay timer or NAVSyncDelay of STA 1 610 that restricts frame transmission for the duration of Tm, and may trigger uplink data or scan completion frame of STA 1 610. As another method, the frame transmitted by AP 1 601 to STA 1 610 may be a downlink frame. In a different method from the method in which AP 1 601 transmits the frame to STA 1 610 after the period, AP 1 601 may transmit the frame to STA 1 610 after receiving the scan completion frame from STA 1 610. While STA 1 610 performs a series of operations for channel scan (while STA 1 610 switches the channel to AP 2 603 and AP 3 605 to receive the NDP frames), STA 1 610 is incapable of communicating with AP 1 601.

STA 1 610 may complete a scan based on scan schedule information provided by AP 1 601. For example, STA 1 610 may collect information of AP 2 603 to AP 3 605. STA 1 610 transmits a measurement report frame 660 to AP 1 601. The measurement report frame 660 is a frame that transmits information (e.g., signal strength, SNR, link congestion) of the neighboring APs including AP 2 603 to AP 3 605. AP 1 601 may use a response frame (e.g., an ACK frame or a BlockAck frame) to respond to the measurement report frame 660 of STA 1 610. AP 1 601 may determine whether to roam and a roaming target based on the information of the neighboring APs of STA 1 610.

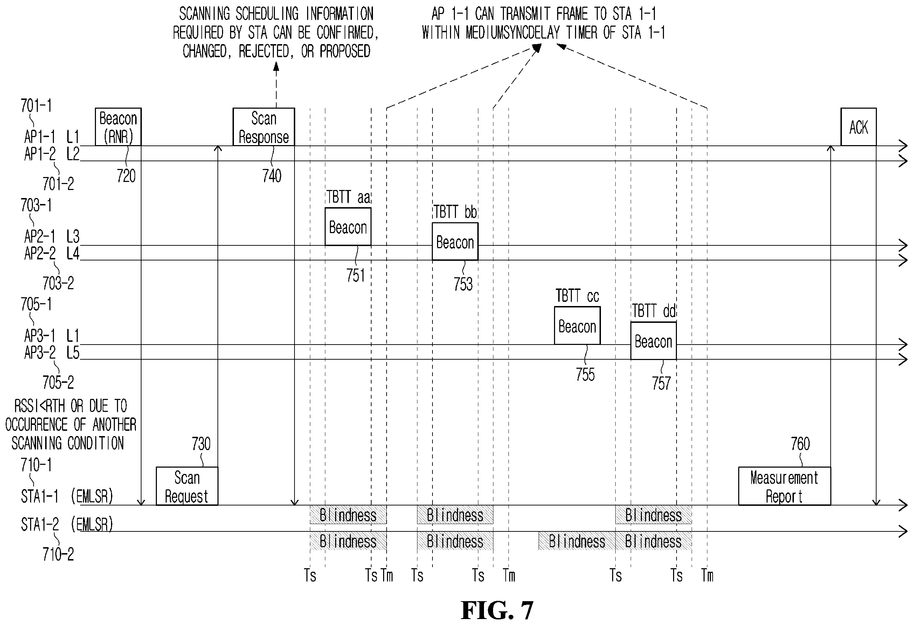

FIG. 7 illustrates a fifth embodiment of a coordinative channel measurement method in a WLAN system.

Referring to FIG. 7, AP MLD 1 701, AP MLD 2 703, AP MLD 3 705, and STA MLD 1 710 may operate in a WLAN. Affiliated AP 1-1 701-1 and AP 1-2 701-2 operate in AP MLD 1 701. AP 1-1 701-1 may operate on a first link, and AP 1-2 701-2 may operate on a second link. Affiliated AP 2-1 703-1 and AP 2-2 703-2 operate in AP MLD 2 703. AP 2-1 703-1 may operate on a third link, and AP 2-2 703-2 may operate on a fourth link. Affiliated AP 3-1 705-1 and AP 3-2 705-2 operate in AP MLD 3 705. AP 3-1 705-1 may operate on the first link, and AP 3-2 705-2 may operate on a fifth link. Affiliated STA 1-1 710-1 and STA 1-2 710-2 operate in STA MLD 1 710. STA MLD 1 710 may be an enhanced multi-link single radio (EMLSR) MLD. That is, STA MLD 1 710 may perform an EMLSR operation, and STA 1-1 710-1 and STA 1-2 710-2 under STA MLD 1 710 may perform the EMLSR operation. Since STA MLD 1 710 is an EMLSR MLS, STA 1-2 710-2 is incapable of receiving a frame and performing channel detection, while STA 1-1 710-1 transmits and receives frames. STA 1-1 710-1 is incapable of receiving a frame and performing channel detection, while STA 1-2 710-2 transmits and receives frames. STA MLD 1 710 may be associated with AP MLD 1 701 and intend to scan neighboring AP MLDs, that is, AP MLD 2 703 and AP MLD 3 705. That is, STA MLD may intend to scan APs that are affiliated with the neighboring AP MLDs. STA MLD 710 may scan APs affiliated with the neighboring AP MLDs to perform association with one of the neighboring APs. A series of operations in which STA MLD 710 stops communication with an AP MLD that is previously associated, associates with one of the APs affiliated with the neighboring AP MLDs, and performs communication with the neighboring AP may be referred to as a roaming operation. The operating frequencies (e.g., center frequencies) of the first link to the fifth link may be different. AP MLD 1 701 to AP MLD 3 705 may communicate in connection with each other. For example, AP MLD 1 701 to AP MLD 3 705 may communicate via wired Ethernet. Alternatively, AP MLD 1 701 to AP MLD 3 705 may communicate via a WLAN. Alternatively, AP MLD 1 701 to AP MLD 3 705 may communicate with each other according to a communication standard different from the wired Ethernet and the WLAN. AP MLD 1 701 to AP MLD 3 705 or subordinate APs of AP MLD 1 701 to AP MLD 3 705 may communicate with each other to form a new MLD layer. For example, AP MLD 1 701 to AP MLD 3 705 may form a new MLD MAC upper layer or form a new MLD MAC lower layer. Alternatively, AP MLD 1 701 to AP MLD 3 705 may form both MLD MAC upper layers and MLD MAC lower layers. As another method, AP MLD 1 701 to AP MLD 3 705 may not form an MLD but exchange communication information with each other. As an example, the exchange of communication information may include exchange of operation information for a roaming operation of an STA MLD associated with AP MLDs (e.g., operation information on link usage and cessation) or exchange of state information of STA MLDs operating roaming operations (e.g., information on the sequence number (SN), packet number (PN), and BlockAck scoreboard of downlink and uplink packets for a specific STA MLD) and a downlink packet of which the destination is an STA MLD that performs the roaming operation. As another example, the exchange of communication information may correspond to exchanging operation information of AP MLDs.

Since AP MLD 1 701 to AP MLD 3 705 communicate with each other, AP MLD 1 701 may be aware of information of a neighboring AP MLD and subordinate APs (e.g., AP MLD 2 703 and AP 2-1 703-1 and AP 2-2 703-2 under AP MLD 2 703). Information of neighboring AP MLDs includes TBTT information of subordinate APs. The TBTT information may be timing information. That is, TBTT information indicates a timing or interval at which beacon frame transmission of each AP or AP MLD is expected. For example, AP MLD 1 701 may be aware of information on a timing at which the beacon frames 751, 753, 755 and 757 of neighboring AP MLDs are transmitted relative to the current time.

AP 1-1 701-1 of AP MLD 1 701 may include TBTT information of a neighboring AP in the beacon frame 720 and transmit the TBTT information. The TBTT information may be transmitted through a reduced neighbor report (RNR) information element included in the beacon frame 720. STA 1-1 710-1 may receive the beacon frame 720 from AP 1. Based on the RNR information element included in the beacon frame 720, STA 1-1 710-1 may be aware of TBTT information of neighboring APs (e.g., TBTT information of APs under AP MLD 2 703 to AP MLD 3 705).

The RSSI, SNR, and the like of the beacon frame 720 of AP 1-1 701-1 or/and data frames received by STA 1-1 710-1 may be lower than a roaming threshold of STA 1-1 710-1. For example, the roaming threshold may be Rth, and the RSSI may be lower than Rth. When the RSSI of a frame received by STA 1-1 710-1 is lower than Rth or under other roaming initiation conditions, STA 1-1 710-1 may transmit a scan request frame 730. As an example, the other roaming initiation conditions may include a decrease in the RSSI of the received frame at a predetermined rate or higher. STA 1-1 710-1 may transmit the scan request frame 730 to AP 1-1 701-1 based on the TBTT information of the neighboring APs. As another method, STA 1-1 710-1 may not receive the beacon frame 720 or the RNR information element may not be included in the beacon frame 720 of AP 1-1 701-1, and thus STA 1-1 410-1 may not be aware of the TBTT information of the neighboring APs. STA 1-1 710-1 may transmit the scan request frame 730 to AP 1-1 701-1 even when STA 1-1 410-1 is not aware of the TBTT information of the neighboring APs. The scan request frame 730 may be a management frame including an action frame, a frame including an information element, a frame in which specific information is included in a control field of a MAC header (e.g., HT control field), or other frames. The scan request frame 730 may include channel scan schedule information requested by STA 1-1 710-1. The channel scan schedule information includes the TBTT information of the neighboring APs (or TBTT timings), link IDs of the neighboring APs, BSSIDs of the neighboring APs, and information on operating frequencies of the APs. The channel scan schedule information may use a listing order of the link IDs or BSSIDs of the neighboring APs to indicate scheduling information that STA performs a scan at a TBTT timing of a corresponding AP. As another method, the scan request frame 730 may include information that requests channel scan schedule from AP 1-1 701-1. That is, STA 1-1 710-1 may not transmit the channel scan schedule information to AP 1-1 701-1. For example, even when not identifying the TBTT information of the neighboring APs, STA 1-1 710-1 may receive the channel scan schedule information from AP 1-1 701-1 and scan the neighboring APs.

AP 1-1 701-1 may transmit a scan response frame 740 to STA 1-1 710-1. The scan response frame 740 may be a response of AP 1-1 701-1 to the scan request frame 730 transmitted by STA 1-1 710-1. As another method, even when AP 1-1 701-1 determines that roaming of STA 1-1 710-1 or STA MLD 1 710 is required, the scan response frame 740 may be transmitted without reception of the scan request frame. The scan response frame 740 may include a response to the channel scan schedule information included in the scan request frame 730 transmitted by STA 1-1 710-1. For example, the scan response frame 740 may include information indicating that AP 1-1 701-1 confirms, modifies, or rejects the channel scan schedule information transmitted by STA 1-1 710-1. In addition, the scan response frame 740 may include the channel scan schedule information that AP 1-1 701-1 provides to STA 1-1 710-1. When AP 1-1 701-1 confirms a channel scan schedule of STA 1-1 710-1, the channel scan schedule information may include information transmitted by STA 1-1 710-1 without modification or may not include information transmitted by STA 1-1 710-1. When AP 1-1 701-1 modifies the channel scan schedule of STA 1-1 710-1, the channel scan schedule information may include channel scan information proposed by AP 1-1 701-1. When AP 1-1 701-1 rejects the channel scan schedule of STA 1-1 710-1, the channel response frame 740 may not include the channel scan schedule information. Alternatively, even when AP 1-1 701-1 rejects the channel scan schedule of STA 1-1 710-1, the scan response frame 740 may include the channel scan information proposed by AP 1. The channel scan schedule provided by AP 1-1 701-1 to STA 1-1 710-1 includes TBTT information and link ID or/and operating frequency information of neighboring APs including subordinate APs of AP MLD 2 703 to AP MLD 3 705. TBTTs of the neighboring APs may be TBTT aa, TBTT bb, TBTT cc, and TBTT dd, TBTT aa is TBTT of AP 2-1 703-1, TBTT bb is TBTT of AP 2-2 703-2, TBTT cc is TBTT of AP 3-1 705-1, and TBTT dd is TBTT of AP 3-2 705-2. TBTT information included in the scan request frame 730 and the scan response frame 740 may indicate the TBTT information of the neighboring APs in TUs or/and offset of a time synchronization function (TSF). 1 TU is 1024 us.

An operation of exchanging the scan request frame 730 and the scan response frame 740 may be performed through multiple links. For example, STA MLD 1 710 may receive the beacon frame 720 of AP MLD 1 701 on at least one of the first link or the second link and request transmission of the scan response frame 740. The exchange of the scan request frame 730 and the scan response frame 740 may be performed on each link. For example, AP 1-1 701-1 and STA 1-1 710-1 operating on the first link may exchange the scan request frame 730 and the scan response frame 740 to scan AP 2-1 703-1 and AP 3-1 705-1. For example, AP 1-2 701-2 and STA 1-2 710-2 operating on the second link may exchange the scan request frame 730 and the scan response frame 740 to scan AP 2-2 703-2 and AP 3-2 705-2.

STA 1-1 710-1 (STA MLD 1 710) may receive the scan response frame 740 from AP 1-1 701-1 or MLD 1 701, and STA MLD 1 710 performs a channel scan based on the channel scan schedule information provided by AP MLD 1 701. At TBTT aa, TBTT bb and TBTT dd, STA 1-1 710-1 and STA 1-2 710-2 may scan AP 2-1 703-1, AP 2-2 703-2 and AP 3-2 705-2 that operate at a different frequency from that of AP 1-1 701-1. STA 1-1 710-1 may modify the operating frequency at TBTT aa to scan AP 2-1 703-1 (e.g., modifying the operating link to the third link at TBTT aa). STA 1-2 710-2 may modify the operating frequency at TBTT bb and TBTT dd to scan AP 2-2 703-2 and AP 3-2 705-2 respectively (e.g., modifying the operating link to the fourth link and the fifth link at TBTT bb and TBTT dd). A time period during which STA 1-1 710-1 and STA 1-2 710-2 modify the operating frequency at respective TBTTs and then operate on the first link and the second link again may be greater than or equal to 2 × Ts + (a beacon transmission period of an AP), and STA 1-1 710-1 and STA 1-2 710-2 are incapable of receiving the frames of AP 1-1 701-1 and AP 1-2 701-2. That is, while STA 1-1 710-1 performs a channel scan, STA 1-2 710-2 cannot receive a frame, and while STA 1-2 710-2 performs a channel scan, STA 1-1 710-1 cannot receive a frame. Ts is a time required for STA 1-1 710-1 and STA 1-2 710-2 to switch these operating frequencies. The time Ts may be an EMLSR transition delay time or a time longer than or equal to the EMLSR transition delay time. When STA 1-1 710-1 operates after returning to the first link from a link different from the first link, STA 1-1 701-1 and STA 1-2 710-2 is incapable of or restricted in transmitting a frame during Tm that corresponds to a MediumSyncDelay timer or NAVSyncDelay time. When STA 1-2 710-2 operates after returning to the second link from a link different from the second link, STA 1-1 701-1 and STA 1-2 710-2 is incapable of or restricted in transmitting a frame during Tm that corresponds to a MediumSyncDelay timer or NAVSyncDelay time.

AP 1-1 701-1 and AP 1-2 701-2 may completely transmit a frame to STA 1-1 710-1 and STA 1-2 710-2 before TBTT aa that is a timing at which STA 1-1 710-1 scans AP 2-1 703-1. STA 1-1 710-1 and STA 1-2 710-2 may completely transmit a frame to AP 1-1 701-1 and AP 1-2 701-2 before TBTT aa. AP 1-1 701-1 and AP 1-2 701-2 may completely transmit a frame to STA 1-1 710-1 and STA 1-2 710-2 before TBTT bb and TBTT cc that are timings at which STA 1-2 710-2 scans AP 2-2 703-2 and AP 3-2 705-2. STA 1-1 710-1 and STA 1-2 710-2 may completely transmit a frame to AP 1-1 701-1 and AP 1-2 701-2 before TBTT bb and TBTT dd.

When AP 1-1 701-1, AP 1-2 701-2, STA 1-1 710-1, and STA 1-2 710-2 complete transmission before respective TBTTs, it may indicate that transmission is completed before Ts that is a time for switching a link at each TBTT. Completion of transmission before a specific timing may include ending a transmit opportunity (TXOP) before the specific timing. When AP 1-1 701-1, AP 1-2 701-2, STA 1-1 710-1, and STA 1-2 710-2 complete a channel access operation (e.g., an EDCA backoff operation) in proximity to each TBTT (e.g., when a backoff counter reaches 0), AP 1-1 701-1 and AP 1-2 701-2 may not transmit the frame to STA 1-1 710-1 and STA 1-2 710-2, and STA 1-1 710-1 and STA 1-2 710-2 may not transmit the frame to AP 1-1 701-1 and AP 1-2 701-2. The backoff counter of AP 1-1 701-1 and AP 1-2 701-2 or/and the backoff counter of STA 1-1 710-1 and STA 1-2 710-2 may remain at 0. Alternatively, even when the backoff counter of AP 1-1 701-1 and AP 1-2 701-2 reaches 0, AP 1-1 701-1 and AP 1-2 701-2 may select a new backoff counter to continuously perform a backoff operation. Alternatively, AP 1-1 701-1 and AP 1-2 701-2 may determine that a transmission queue has no frame whose destinations are STA 1-1 710-1 and STA 1-2 710-2, and when there is a frame whose destination is an STA different from STA 1-1 710-1 and STA 1-2 710-2, AP 1-1 701-1 and AP 1-2 701-2 may transmit the frame to the STA different from STA 1-1 710-1 and STA 1-2 710-2. After the channel scan operations of STA 1-1 710-1 and STA 1-2 710-2 are finished, AP 1-1 701-1 and AP 1-2 701-2 or/and STA 1-1 710-1 and STA 1-2 710-2 may transmit frames. AP 1-1 701-1 and AP 1-2 701-2 do not transmit a frame to STA 1-1 710-1 and STA 1-2 710-2 at TBTT aa, TBTT bb, or TBTT dd during a time period having a length greater than or equal to 2 × Ts + (a beacon transmission period of an AP). For example, AP 1-1 701-1 and AP 1-2 701-2 delays the channel access operation for transmission to STA 1-1 710-1 and STA 1-2 710-2 or does not transmit a frame to STA 1-1 710-1 and STA 1-2 710-2 and waits even when an EDCA backoff counter reaches 0 (e.g., maintaining the backoff counter at 0 or reselecting a backoff counter). AP 1-1 701-1 and AP 1-2 701-2 may transmit a frame to STA 1-1 710-1 and STA 1-2 710-2 after the time period. A frame transmitted to STA 1-1 710-1 and STA 1-2 710-2 by AP 1-1 701-1 and AP 1-2 701-2 may be a trigger frame. For example, the trigger frame transmitted by AP 1-1 701-1 to STA 1-1 710-1 may be a frame for releasing the MediumSyncDelay timer or NAVSyncDelay of STA 1-1 710-1 that restricts frame transmission for the duration of Tm, and may trigger uplink data of STA 1-1 710-1. As another method, the frame transmitted by AP 1-1 701-1 to STA 1-1 710-1 may be a downlink frame.

At TBTT cc, STA 1-1 710-1 may scan AP 3-1 705-1 that operates at the same frequency as that of AP 1-1 701-1. However, while STA 1-1 710-1 scans AP 3-1 705-1, STA 1-2 710-2 may be incapable of transmission transmission/reception. AP 1-1 701-1 and AP 1-2 701-2 may completely transmit a frame to STA 1-1 710-1 and STA 1-2 710-2 before TBTT cc that is the TBTT of AP 3-1 705-1. STA 1-1 710-1 and STA 1-2 710-2 completely transmits a frame to AP 1-1 701-1 and AP 1-2 701-2 before TBTT cc.

STA MLD 1 710 may complete a scan based on scan schedule information provided by AP MLD 1 701. For example, STA MLD 1 710 may collect information of AP MLD 2 703 to AP MLD 3 705 (e.g., information of subordinate APs of AP MLD 2 703 to AP MLD 3 705). STA MLD 1 710 transmits a measurement report frame 760 to AP MLD 1 701. The measurement report frame 760 is a frame for transmitting information of the neighboring AP MLDs, that is, AP MLD 2 703 to AP MLD 3 705 (e.g., the signal strength, SNR, and link congestion of APs operating under AP MLD 2 703 to AP MLD 3 705). AP MLD 1 701 may use a response frame (e.g., an ACK frame or a BlockAck frame) to respond to the measurement report frame 760 from STA MLD 1 710. AP MLD 1 701 may determine whether to roam and a roaming target based on the information of the neighboring AP MLDs of STA MLD 1 710.

In the embodiment, in order to the information of the neighboring AP MLDs, STA MLD 1 710 may transmit a probe request frame and then receive a probe response frame, instead of receiving the beacon frames 751, 753, 755 and 757 of the APs.

Hereinafter, embodiments of a channel measurement procedure will be illustrated. The channel measurement procedure may be performed between a plurality of APs and a single STA. The plurality of APs include a first AP and remaining APs. The first AP refers to an AP associated with the STA. The remaining APs refer to APs other than the first AP among the plurality of APs. That is, the remaining APs may be at least one. The plurality of APs may be APs that are connected to each other. Here, "connection" includes wired connection and wireless connection, and connected APs may communicate with each other. For example, the plurality of APs may be connected wiredly or wirelessly to each other. As another example, at least some APs may be wirelessly connected to each other and other APs may be wiredly connected to each other.

Each of the plurality of APs may be an MLD. Alternatively, each of the plurality of APs may not be an MLD. In a case where the plurality of APs are MLDs, the STA may be an MLD. In a case where the plurality of APs are not MLDs, the STA may not be an MLD. In a case where the plurality of APs and the STA are MLDs, the plurality of APs and the STA may be EMLSR MLDs.

Each of the plurality of APs may operate on different links. For example, the first AP may operate on a first link, a second AP which is one of the remaining APs may operate on a second link, and another of the remaining APs may operate on a third link. Here, each of the links may have different operating frequencies. In a case where each of the plurality of APs is an MLD, each AP may operate on a plurality of links.

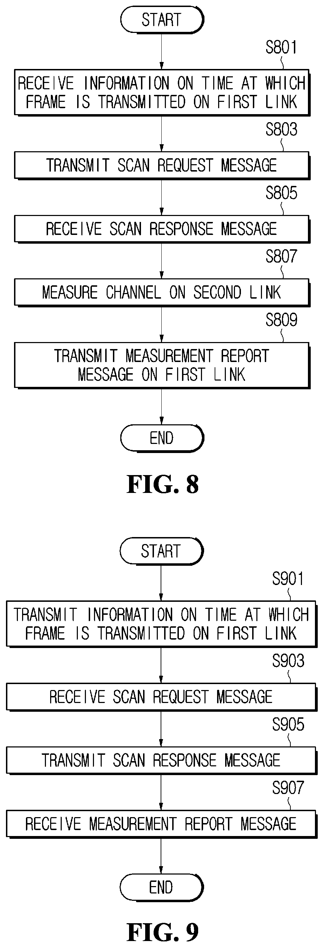

FIG. 8 illustrates a flowchart of a procedure of measuring a channel according to an embodiment of the present disclosure. The channel measurement procedure of FIG. 8 is performed not by an MLD but by an STA. The STA (e.g., the STA 310 of FIG. 3) is connected to a first AP (e.g., AP 1 301 of FIG. 3). That is, an operating link of the STA is a link in which the first AP operates. The link in which the first AP operates may be referred to as a first link.

Referring to FIG. 8, in step S801, the STA receives information related to a time at which a frame (e.g., the beacon frame 351 of FIG. 3) is transmitted on the first link. Here, the time at which the frame is transmitted refers to a time at which the frame is transmitted by at least one remaining AP. For example, the time at which the frame is transmitted may include a time at which a second AP (e.g., AP 2 303 of FIG. 3) among the remaining APs transmits the frame, and a time at which another AP (e.g., AP 3 305 of FIG. 3) among the remaining APs transmits the frame. For example, the time at which the frame is transmitted may be expressed as an absolute time value or a relative time value with respect to a reception time of the information. In addition, the time value may be expressed in a time unit (e.g., ps, ns, µs, or ms) or a resource unit (e.g., a frame or a slot). The frame may include at least one of a beacon frame or a null data PPDU (NDP) frame. The information related to the time at which the frame is transmitted may be received from the first AP. The information related to the time at which the frame is transmitted may be received through the beacon frame of the first AP. The information related to the time at which the frame is transmitted may be received through a RNR information element of the beacon frame.

In step S803, the STA transmits a scan request message (e.g., the scan request frame 330 of FIG. 3) on the first link. The scan request message may be transmitted based on whether a scan condition is satisfied. For example, the scan condition may be satisfied in a case where a RISS or an SNR of a frame transmitted from the first AP is equal to or lower than a threshold. The scan request message may be transmitted in various types of frames. The scan request message may include scheduling information of the STA. The scheduling information includes at least one of the information related to the time at which the frame is transmitted, a link ID of at least one remaining AP, a BSSID of the at least one remaining AP, or operating frequency information of the at least one remaining AP. The scheduling information may be information indicating a time and an order in which the STA performs a scan. For example, the STA may perform the scan according to an order of link IDs included in the scheduling information.

In step S805, the STA receives a scan response message (e.g., the scan response frame 340 of FIG. 3). The scan response message may be a message transmitted from the first AP. The scan response message may be a message transmitted in response to the scan request message. On the other hand, the scan response message may be a message transmitted regardless of the scan request message. The scan response message may include a response to the scheduling information. For example, the scan response message may include an approval, a change, or a rejection of the scheduling information. In a case where the scan response message includes the approval of the scheduling information, the scheduling information transmitted by the STA may be included in the scan response message. In a case where the scan response message includes the change of the scheduling information, the scan response message may include scheduling information generated by the first AP. In a case where the scan response message includes the rejection of the scheduling information, the scan response message may not include the scheduling information or may include the scheduling information generated by the first AP. The scheduling information generated by the first AP includes at least one of the time at which the frame is transmitted, the link ID of the at least one remaining AP, or the operating frequency information of the at least one remaining AP.

In step S807, the STA measures a channel in a second link. The second link refers to a link in which a second AP operates. The second AP refers to one of the remaining APs. For channel measurement, the STA may switch an operating link to the second link at a time at which a frame is transmitted by the second AP. For example, the STA may switch the operating link based on transmitted scheduling information or scheduling information received from the first AP. Although not shown in FIG. 8, prior to the switching of the operating link, the STA may transmit a scan start message (e.g., the scan initiation frame 561 of FIG. 5) to the first AP. After switching the operating link, for channel measurement, the STA may receive a frame (e.g., the beacon frame 351 of FIG. 3) transmitted by the second AP. For example, the frame includes a beacon frame or an NDP frame. The STA may measure the channel based on the received frame. For example, the STA may measure the channel by measuring at least one of a signal strength, an SNR, or link congestion of the second AP in the operating link. After the channel measurement for the second AP is performed, channel measurements for other remaining APs may be repeated. For example, channel measurement for APs other than the second AP among the remaining APs may be performed. That is, channel measurement for a link other than the second link may be performed.

In step S809, the STA transmits a measurement report message (e.g., the measurement report frame 360 of FIG. 3) on the first link. After the channel measurement is completed, the STA may switch the operating link to the first link. After the switching of the operating link is completed, the STA may transmit a scan complete message (e.g., the scan completion frame 571 of FIG. 5) to the first AP. The STA may transmit the measurement report message to the first AP. The measurement report message may include results measured in step S807. For example, the measurement report message may include at least one of the signal strength, the SNR, or the link congestion of the second AP measured in step S807.

In the embodiment described with reference to FIG. 8, it is described that channel measurement is performed in one link. That is, in FIG. 8, the measurement report message may be transmitted after channel measurement in one link. On the other hand, according to another embodiment, the measurement report message may be transmitted after channel measurements in a plurality of links. The measurement report message may include measurement results for at least one link. For example, the measurement report message may be separately transmitted for each link, or alternatively, may be transmitted for each group of a plurality of links. As another example, a plurality of measurement report messages including at least one measurement result may be transmitted. Even after the transmission of the measurement report message, steps S807 to S809 may be repeatedly performed. For example, after a channel report message for at least one link is transmitted, channel measurement in the remaining links may be performed, and the channel report message may be transmitted.

FIG. 9 illustrates a flowchart of a method of receiving a channel measurement report according to an embodiment of the present disclosure. The procedure of FIG. 9 is performed by a first AP (e.g., AP 1 301 of FIG. 3). The first AP is an AP that is not an MLD. The first AP operates in a first link. The first AP may obtain a time at which the remaining APs transmit a frame from the remaining APs.

Referring to FIG. 9, in step S901, the first AP transmits information on a time at which a frame (e.g., the beacon frame 351 of FIG. 3) is transmitted. The time at which the frame is transmitted refers to a time at which the frame is transmitted by at least one remaining AP. For example, the time at which the frame is transmitted may include a time at which a second AP (e.g., AP 2 303 of FIG. 3) among the remaining APs transmits the frame, and a time at which another AP (e.g., AP 3 305 of FIG. 3) among the remaining APs transmits the frame. The frame may be, for example, a beacon frame. An AP may be a remaining AP excluding the first AP. Information on a time at which a frame is transmitted may be transmitted to an STA (e.g., the STA 310 of FIG. 3). The information related to the time at which the frame is transmitted may be received through the beacon frame of the first AP. The information related to the time at which the frame is transmitted may be received through a RNR information element of the beacon frame.

In step S903, the first AP receives a scan request message (e.g., the scan request frame 330 of FIG. 3) from the STA. The scan request message may be generated by the STA based on whether a scan condition is satisfied. For example, the scan condition may be satisfied in a case where a RSSI or an SNR of a frame transmitted from the first AP is equal to or lower than a threshold. The scan request message may be transmitted in various types of frames. The scan request message may include scheduling information of the STA. The scheduling information includes at least one of information related to a scan time of at least one remaining AP, a link ID of at least one remaining AP, a BSSID of the at least one remaining AP, or operating frequency information of the at least one remaining AP. The scheduling information may be information indicating an order in which the STA performs a scan. For example, the STA may perform the scan according to an order of link IDs included in the scheduling information.

In step S905, the first AP transmits a scan response message (e.g., the scan response frame 340 of FIG. 3). The scan response message may be transmitted to the STA. The scan response message may be transmitted in response to the scan request message. On the other hand, the scan response message may be transmitted regardless of the scan request message. The scan response message may include a response to the scheduling information. For example, the scan response message may include an approval, a change, or a rejection of the scheduling information. In a case where the scan response message includes the approval of the scheduling information, the scheduling information transmitted by the STA may be included in the scan response message. In a case where the scan response message includes the change of the scheduling information, the scan response message may include scheduling information generated by the first AP. In a case where the scan response message includes the rejection of the scheduling information, the scan response message may not include the scheduling information or may include the scheduling information generated by the first AP. The scheduling information generated by the first AP includes at least one of the time at which the frame is transmitted, the link ID of the at least one remaining AP, or the operating frequency information of the at least one remaining AP. Before transmitting the scan response message, the first AP may share information and obtain information of at least one remaining AP by performing coordination with the at least one remaining AP. The first AP may transmit the scan response message based on the obtained information of the at least one remaining AP. Based on scheduling information of the scan response message, the first AP may stop frame transmission to the STA. That is, the first AP may set a communication prohibited period based on the scan response message.

In step S907, the first AP receives a measurement report message (e.g., the measurement report frame 360 of FIG. 3) from the STA. The measurement report message may include information of a link in which the at least one remaining AP measured by the STA operates. The measurement report message may include at least one of signal strength, SNR, or link congestion of the at least one remaining AP measured by the STA. The measurement report message may be received after the STA measures a link in which one remaining AP operates. On the other hand, the measurement report message may be received after measurements for a plurality of remaining APs are performed. The first AP may determine at least one of whether the STA roams or a roaming target based on the received measurement report message.

In FIGS. 8 and 9, in a case where the AP and the STA are MLDs, each of the STA, the first AP, and the at least one remaining AP may operate in a plurality of links. For example, the STA may perform steps S801 to S805 in one of the links (e.g., the first link of FIG. 4) in which the first AP operates, and may perform step S807 in at least one of the links (e.g., the third link of FIG. 4) in which the remaining APs operate. For example, a measurement result message may be transmitted on the link in which step S801 is performed.

The operations of the method according to the various aspects of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

### Industrial Applicability

The present disclosure may be applied to devices and recording media in a wireless LAN system.

## Claims

1. A method for operating a station (STA) in a wireless local area network (WLAN) system, the method comprising:
receiving information on a time at which a frame is transmitted from a first access point (AP);
receiving a scan response message that is generated based on the information on the time at which the frame is transmitted;
receiving the frame from a second AP based on the scan response message;
measuring a channel based on the frame received from the second AP; and
transmitting a measurement report message to the first AP,
wherein the information on the time at which the frame is transmitted includes a time at which the frame is transmitted by at least one AP including the second AP.

2. The method of claim 1, further comprising:
switching an operating link to a link in which the second AP operates to receive the frame from the second AP; and
switching the operating link to a link in which the first AP operates to transmit the measurement report message.

3. The method of claim 2, further comprising:
transmitting a scan start message to the first AP before switching the operating link to the link in which the second AP operates; and
transmitting a scan complete message to the first AP after switching the operating link to the link in which the first AP operates.

4. The method of claim 1, further comprising transmitting a scan request message including scheduling information for measuring a channel of the second AP,
wherein the scheduling information is generated based on the information on the time at which the frame is transmitted, and
wherein the scan response message is transmitted based on the scan request message and includes information related to approval, change, or rejection of the scheduling information.

5. The method of claim 4, wherein the scan request message is transmitted based on whether a scan condition is satisfied, and
wherein the scan condition comprises a case in which a received signal strength indication (RSSI) or a signal-to-noise ratio (SNR) of the frame transmitted by the first AP is equal to or lower than a predefined threshold.

6. The method of claim 4, wherein, based on the scan response message including information related to change or rejection of the scheduling information, the scan response message includes scheduling information generated by the first AP.

7. The method of claim 4, wherein the scheduling information includes at least one of the information on the time at which the frame is transmitted, a link ID of the at least one AP, a BSSID of the at least one AP, or an operating frequency of the at least one AP.

8. The method of claim 1, wherein the scan response message is generated based on coordination between the first AP and the at least one AP.

9. The method of claim 1, wherein the measurement report message includes at least one of a signal strength, an SNR, or a link congestion of the second AP that are measured by the STA.

10. The method of claim 1, wherein the frame includes at least one of a beacon frame, an NDP frame, or a probe frame.

11. A method for operating a first access point (AP) in a wireless local area network (WLAN), the method comprising:
obtaining information on a time at which a frame is transmitted;
transmitting the information on the time at which the frame is transmitted to a station (STA);
transmitting a scan response message that is generated based on the information on the time at which the frame is transmitted; and
receiving a measurement report message from the STA,
wherein the information on the time at which the frame is transmitted includes information on a time at which the frame is transmitted by at least one AP, and
wherein the measurement report message includes a channel measurement result for a second AP that is one of the at least one AP.

12. The method of claim 11, further comprising receiving a scan request message,
wherein the scan request message includes scheduling information for performing channel measurement by the STA, and the scheduling information is generated based on the information on the time at which the frame is transmitted.

13. The method of claim 12, wherein the scan response message is transmitted based on the scan request message, and the scan response message includes information related to approval, change, or rejection of the scheduling information.

14. The method of claim 11, wherein the scan response message is obtained based on negotiation with the at least one AP.

15. The method of claim 11, wherein the measurement report message includes a channel measurement result for the second AP and includes at least one of a signal strength, an SNR, or a link congestion of the second AP.

16. The method of claim 12, further comprising setting, based on the scheduling information, a prohibited period during which communication with the STA is not performed.

17. A station (STA) in a wireless local area network (WLAN) system, the STA comprising:
a transceiver; and
a processor coupled to the transceiver,
wherein the processor is configured to:
receive information on a time at which a frame is transmitted from a first access point (AP);
receive a scan response message that is generated based on the information on the time at which the frame is transmitted;
receive the frame from a second AP based on the scan response message;
measure a channel based on the frame received from the second AP; and
transmit a measurement report message to the first AP, and
wherein the information on the time at which the frame is transmitted includes a time at which the frame is transmitted by at least one AP including the second AP.

18. A first access point (AP) in a wireless local area network (WLAN), the first AP comprising:
a transceiver; and
a processor coupled to the transceiver,
wherein the processor is configured to:
obtain information on a time at which a frame is transmitted;
transmit the information on the time at which the frame is transmitted to a station (STA);
transmit a scan response message that is generated based on the information on the time at which the frame is transmitted; and
receive a measurement report message from the STA, and
wherein the information on the time at which the frame is transmitted includes information on a time at which the frame is transmitted by at least one AP, and
wherein the measurement report message includes a channel measurement result for a second AP that is one of the at least one AP.
